(19) Europäisches Patentamt
European Patent Office
Office européen des brevets

(11) **EP 1 920 290 B1**

(12) **EUROPÄISCHE PATENTSCHRIFT**

(45) Veröffentlichungstag und Bekanntmachung des Hinweises auf die Patenterteilung:
**24.10.2012  Patentblatt 2012/43**

(21) Anmeldenummer: 06776330.0

(22) Anmeldetag: **20.07.2006**

(51) Int Cl.:
***G02C 7/02*** *(2006.01)*      ***G01M 11/02*** *(2006.01)*

(86) Internationale Anmeldenummer:
**PCT/EP2006/007166**

(87) Internationale Veröffentlichungsnummer:
**WO 2007/019938 (22.02.2007 Gazette 2007/08)**

(54) **TOOL ZUR BERECHNUNG DER PERFORMANCE VON GLEITSICHTGLÄSERN**

TOOL FOR CALCULATING THE PERFORMANCE OF PROGRESSIVE LENSES

OUTIL POUR CALCULER LA PERFORMANCE DE VERRES PROGRESSIFS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.08.2005  DE 102005038859**

(43) Veröffentlichungstag der Anmeldung:
**14.05.2008  Patentblatt 2008/20**

(73) Patentinhaber: **Rodenstock GmbH**
**80469 München (DE)**

(72) Erfinder:
• **ESSER, Gregor**
**81735 München (DE)**
• **KIM, Heejin**
**Yuksamdong 716, Kannamgu,**
**Seoul (KR)**
• **ALTHEIMER, Helmut**
**87650 Baisweil-Lauchdorf (DE)**
• **BECKEN, Wolfgang**
**81541 München (DE)**
• **UTTENWEILER, Dietmar**
**82057 Icking (DE)**

(74) Vertreter: **Müller-Boré & Partner**
**Patentanwälte**
**Grafinger Straße 2**
**81671 München (DE)**

(56) Entgegenhaltungen:
**EP-A- 0 295 849      EP-A- 0 994 336**
**EP-A2- 0 132 955      WO-A-2004/086125**
**US-A- 5 661 816      US-B1- 6 366 823**

• 'Brillenrezept' 01 April 2005, Seite 1,
XP007920459

Bemerkungen:
Die Akte enthält technische Angaben, die nach dem Eingang der Anmeldung eingereicht wurden und die nicht in dieser Patentschrift enthalten sind.

EP 1 920 290 B1

**Beschreibung**

Die Erfindung betrifft ein Verfahren zum Auswerten der Performance von Gleitsichtgläsern sowie eine entsprechende Vorrichtung, ein Computerprogrammerzeugnis, ein Speichermedium und eine graphische Benutzerschnittstelle.

Individuelle Brillengläser, insbesondere progressive individuelle Brillengläser, haben deutlich bessere Abbildungseigenschaften wie konventionelle Brillengläser und bieten damit einen großen Kundennutzen für den Endverbraucher. Individuelle Brillengläser sind in zahlreichen Patentveröffentlichungen beschrieben worden, wie beispielsweise DE 197 01 312, DE 103 13 275 oder WO 01/81979.

Allerdings hängt die Größe dieses Vorteils stark von den individuellen Parametern selbst ab. Weichen diese individuellen Parameter sehr stark von den Durchschnittswerten ab, so ist der Vorteil und damit der Kundennutzen für den Endverbrauch bedeutend größer als wenn die individuellen Parameter sehr nah an den Durchschnittsparametern liegen.

EP 0 295 849 A2 offenbart ein Verfahren zum Optimieren von progressiven Brillengläsern, wobei die zu optimierende Fläche des Brillenglases, zumindest eine Performancecharakteristik aufweist. Die zu optimierende Fläche wird durch eine Kombination einer mathematischen Basisfunktion und einer Optimierungsfunktion, welche zumindest einen einstellbaren Parameter umfaßt, dargestellt. Das Verfahren zum Optimieren des progressiven Brillenglases umfaßt eine Minimierung/Maximierung einer Ziel- bzw. Gütefunktion, welche von der zumindest einen Performancecharakteristik abhängt. Die Minimierung/Maximierung der Zielfunktion erfolgt durch eine Variation des zumindest einen einstellbaren Parameter der Optimierungsfunktion.

US 6,366,823 B1 offenbart ein Verfahren zum Design einer optischen, gekrümmten Fläche. Die Fläche wird durch ein Gitter in mehrere rechteckige Bereiche, welche mittels mathematischer Funktionen dargestellt sind, unterteilt. Die optische Leitung der durch mathematische Funktionen dargestellten gekrümmten Fläche wird abgeschätzt und auf Grundlage des Ergebnisses dieser Einschätzung mindestens ein Parameter der Fläche in bestimmten Punkten, wie z.B. die Durchbiegung, die Neigungen und die Krümmungen der Fläche, verändert.

Aufgabe dieser Erfindung ist es, ein schnelles Verfahren zur Berechnung der Performance von Gleitsichtgläsern bei vorgegebenen individuellen Parametern bereitzustellen, insbesondere ohne vollständige Berechnung der Oberflächen der Gleitsichtgläser.

Diese Aufgabe wird erfindungsgemäß durch die Merkmale der unabhängigen Ansprüche gelöst. Bevorzugte Ausführungsformen der Erfindung sind Gegenstand der abhängigen Ansprüche.

Gemäß der Erfindung wird ein Verfahren zur computergestützten Auswertung bzw. Ermittlung der Performance bzw. des Wirkungseffekts bzw. des Leistungseffekts von Gleitsichtgläsern bereitgestellt, und zwar unter Berücksichtigung individueller Parameter eines bestimmten Brillenträgers, wobei die individuellen Parameter zumindest individuelle Rezeptdaten, insbesondere Addition, sphärische, astigmatische und/oder prismatische Wirkung, und/oder individuelle Trägerdaten des Brillenträgers, insbesondere, Vorneigung, Fassungsscheibenwikel, Hornhautscheitelabstand und/oder Pupillendistanz, umfassen,
wobei das Verfahren die folgenden Schritte umfaßt

- Erfassen der individuellen Parameter;
- Berechnen eines Gesamtperformance- bzw. Gesamtwirkungseffektfaktors *P* für jeweils mindestens zwei Qualitätsklassen von Gleitsichtgläsern in Abhängigkeit von den individuellen Parameter, wobei der Gesamtperformancefaktors *P* mit der Qualität der monokularen Sehschärfe und/oder des binokularen Seheindrucks korreliert;
- Ausgeben des berechneten Gesamtperformancefaktors *P* für die Qualitätsklassen.

Alle Gleitsichtgläser aller Qualitätsklassen weisen ein im wesentlichen gleiches Grunddesign auf, wobei sich die Qualitätsklassen in der Art und Weise der Optimierung der Gleitsichtgläser in der Qualitätsklasse in Abhängigkeit von den individuellen Parameter unterscheiden.

Der Gesamtperformancefaktor *P* kann durch eine Multiplikation von einzelnen Wirkungseffekt- bzw. Leistungseffekt- Performancefaktoren, welche jeweils Funktionen der einzelnen individuellen Parameter sind bzw. diesen entsprechen, erhalten werden

Die individuellen Rezeptdaten umfassen die sphärische Wirkung *Sph* und den Betrag *Ast* der astigmatischen Wirkung. Der Gesamtperformancefaktor *P* wird durch eine Multiplikation von zumindest einem ersten Performance- bzw. Wirkungseffektfaktors $P_1$ und einem zweiten $P_2$ Performance- bzw. Wirkungseffektfaktors erhalten, wobei der erste Performancefaktor $P_1$ eine

Funktion $P_1(Sph) = \sum_{i=0}^{N} a_1 * Sph^i$ der sphärischen Wirkung *Sph* und der zweite Performancefaktor eine

Funktion $P_2(Ast) = \sum_{i=0}^{N} b_i * Ast^i$ des Betrags (bzw.

des Zylinders) *Ast* der astigmatischen Wirkung ist. Die Koeffizienten $a_i$ hängen bevorzugt mittels Polynome der Ordnung *N* von dem Betrag *Ast* der astigmatischen Wirkung und die Koeffizienten $b_i$ mittels Polynome der Ordnung *N* von der sphärischen Wirkung *Sph* ab.

Vorzugsweise umfassen die individuellen Rezeptdaten die Achslage *A* der astigmatischen Wirkung. Der Gesamtperformancefaktor *P* kann vorzugsweise zusätzlich durch eine Multiplikation mit einem dritten Per-

formance- bzw. Wirkungseffektfaktors $P_3(A) = A_1 * \sin^2 A + A_2 * \cos^2 A$ erhalten werden, wobei die Koeffizienten $A_1$ und $A_2$ mittels Polynome der Ordnung $N$ von der sphärischen $Sph$ Wirkung und dem Betrag $Ast$ der astigmatischen Wirkung abhängen.

Weiter bevorzugt umfassen die individuellen Rezeptdaten den Betrag (bzw. das Prisma) $Prism$ der prismatischen Wirkung. Der Gesamtperformancefaktor kann vorzugsweise zusätzlich durch eine Multiplikation mit einem vierten Performance-bzw. Wirkungseffektfaktor $P_4 = \sum_{i=0}^{N} c_i * Prism^i$ erhalten werden, wobei

die Koeffizienten $c_i$ bevorzugt mittels Polynome der Ordnung $N$ von dem Betrag $Ast$ der astigmatischen Wirkung und der sphärischen Wirkung $Sph$ abhängen.

Die individuellen Rezeptdaten können ferner vorzugsweise die Basislage $B$ der prismatischen Wirkung umfassen. Der Gesamtperformancefaktor kann vorzugsweise zusätzlich durch eine Multiplikation mit einem fünften Performance- bzw. Wirkungseffektfaktor $P_5(B) = B_1 * \sin^2 B + B_2 * \cos^2 B$ erhalten werden.

Weiter bevorzugt umfassen die individuellen Trägerdaten den Homhautscheitetabstand (HSA) des Brillenträgers. Der Gesamtperformancefaktor kann vorzugsweise zusätzlich durch eine Multiplikation mit einem sechsten N Performance- bzw. Wirkungseffektfaktor

$$P_6(HSA) = \sum_{i=0}^{N} d_i * HSA^i$$ erhalten werden.

Die individuellen Trägerdaten umfassen ferner vorzugsweise die Vorneigung $V$ des Gleitsichtglases angeordnet in einer vorgegebenen Brillenfassung. Der Gesamtperformancefaktor wird vorzugsweise zusätzlich durch eine Multiplikation mit einem siebten Performance- bzw. Wirkungseffektfaktor $P_7(V) = \sum_{i=0}^{N} e * V^i$ erhalten.

Gemäß einer weiteren bevorzugten Ausführungsform umfassen die individuellen Trägerdaten den Fassungsscheibenwinkel einer vorgegebenen Brillenfassung, in welche das Gleitsichtglas angeordnet ist. Der Gesamtperformancefaktor wird vorzugsweise zusätzlich durch eine Multiplikation mit einem achten Performance-bzw. Wirkungseffektfaktor

$$P_8(FSW) = \sum_{i=0}^{N} f_i * FSW^i$$ erhalten.

Bevorzugt umfassen die individuellen Trägerdaten die Pupillendistanz $PD$ des Brillenträgers. Der Gesamtperformancefaktor kann ferner zusätzlich durch eine Multiplikation mit einem neunten Performance- bzw.

Wirkungseffektfaktor $P_9(PD) = \sum_{i=0}^{N} g_i * PD^i$ erhalten werden.

Gemäß einer weiteren bevorzugten Ausführungsform umfassen die individuellen Rezeptdaten die Addition $ADD$ des Gleitsichtglases. Der Gesamtperformancefaktor wird vorzugsweise zusätzlich durch eine Multiplikation mit einem zehnten Performance- bzw. Wirkungseffektfaktor $P_{10}(ADD) = \sum_{i=0}^{N} h_i * ADD^i$ erhalten.

Vorzugsweise werden die Performancefaktoren $P_i = P_i(Sph, Ast,...), i = 1,2,...$ im wesentlichen mittels eines numerischen Fits bzw. Angleichung der Daten der relativen Blickfeldgröße der Gleitsichtgläser der jeweiligen Qualitätsklasse für eine Mehrzahl von Kombinationen der individuellen Parameter ermittelt, wobei die Blickfeldgröße für eine vorgegebene Kombination von individuellen Parameter als das Verhältnis der Blickfeldgröße eines Gleitsichtglases der jeweiligen Qualitätsklasse für die vorgegebene Kombination von individuellen Parameter und einer vorgegebenen Soll-Blickfeldgröße definiert ist. Vorzugsweise werden für jede Qualitätsklasse die Daten der relativen Blickfeldgröße für die Mehrzahl von Kombinationen von individuellen Parametern vorab ermittelt und beispielsweise in Form einer Matrix bzw. Tabelle bzw. Serie von Vektoren gespeichert.

Das Verfahren zum Auswerten der. Performance von Gleitsichtgläsern umfasst vorzugsweise ferner die Schritte:

- Eingeben der individuellen Parametern;
- Anzeigen der berechneten Gesamtperformancefaktoren der Qualitätsklassen.

Vorzugsweise werden die berechneten Gesamtperformancefaktoren als Balken, deren Länge mit dem berechneten Gesamtperformancefaktor korreliert, angezeigt.

Das obige Verfahren ermöglicht es, ein schnelles Auswerten und/oder eine Demonstration der Performance bzw. der Vor- und Nachteile von Gleitsichtgläsern, welche unterschiedlichen Qualitätsklassen angehören, vorzunehmen, insbesondere ohne daß die Gleitsichtgläser (d.h. deren Vorder- und/oder Rückfläche) vorab einzeln berechnet bzw. ermittelt werden müssen.

Weiterhin wird gemäß der Erfindung ein Computerprogrammerzeugnis bereitgestellt, welches ausgelegt ist, wenn geladen und ausgeführt auf einem Computer bzw. geeignetem System, das Verfahren zur Auswertung bzw. Ermittlung der Performance bzw. des Wirkungseffekts bzw. des Leistungseffekts eines Gleitsichtglases gemäß der Erfindung bzw. einer bevorzugten Ausführungsform hiervon aus- bzw. durchzuführen.

Gemäß der Erfindung wird ferner ein Speichermedium mit darauf gespeichertem Computerprogramm bereitgestellt, wobei das Computerprogramm ausgelegt ist, wenn geladen und ausgeführt auf einem Computer, das Verfahren zur Auswertung bzw. Ermittlung der Performance bzw. des Wirkungseffekts bzw. des Leistungsettekts eines Gleitsichtglases mit den Merkmalen gemäß der Erfindung bzw. einer bevorzugten Ausführungsform hiervon aus- bzw. durchzuführen.

Gemäß de Erfindung wird ferner eine Vorrichtung zur computergestützten Auswertung bzw. Ermittlung der Performance bzw. des Wirkungseffekts bzw. des Leistungseffekts von Gleitsichtgläsern bereitgestellt, und zwar unter Berücksichtigung individueller Parameter eines bestimmten Brillenträgers, wobei die individuellen Parameter zumindest individuelle Rezeptdaten, insbesondere Addition, sphärische, astigmatische und/oder prismatische Wirkung, und/oder individuelle Trägerdaten des Brillenträgers, insbesondere, Vorneigung, Fassungsscheibenwikel, Hornhautscheitelabstand und/oder Pupillendistanz, umfassend:

- Erfassungsmittel zum Erfassen der individuellen Parameter;
- Berechnungsmittel zum Berechnen eines Gesamtperformancefaktors $P$ für jeweils mindestens zwei Qualitätsklassen von Gleitsichtgläsern in Abhängigkeit von den individuellen Parameter, wobei der Gesamtperformancefaktors $P$ mit der Qualität der monokularen Sehschärfe und/oder des binokularen Seheindrucks korreliert;
- Ausgabemittel zum Ausgeben des berechneten Gesamtperformancefaktors $P$ für die Qualitätsklassen.

Alle Gleitsichtgläser aller Qualitätsklassen weisen ein im wesentlichen gleiches Grunddesign auf, wobei sich die Qualitätsklassen in der Art und Weise der Optimierung der Gleitsichtgläser in der Qualitätsklasse in Abhängigkeit von den individuellen Parameter unterscheiden.

Der Gesamtperformancefaktor kann durch eine Multiplikation von einzelnen Performancefaktoren, welche Funktionen der einzelnen individuellen Parameter sind, erhalten, werden

Die individuellen Rezeptdaten umfassen die sphärische Wirkung $Sph$ und den Betrag $Ast$ der astigmatischen Wirkung. Der Gesamtperformancefaktor $P$ wird durch eine Multiplikation von zumindest einem ersten Performancefaktor $P_1$ und einem zweiten $P_2$ Performancefaktor erhalten, wobei der erste Performancefaktor $P_1$ eine Funktion $P_1(Sph) = \sum_{i=0}^{N} a_i * Sph^i$ der sphärischen Wirkung $Sph$ und der zweite Performancefaktor eine Funktion $P_2(Ast) = \sum_{i=0}^{N} b_i * Ast^i$ des Betrags $Ast$ der astigmatischen Wirkung ist. Die Koeffizienten $a_i$ hängen bevorzugt mittels Polynome der Ordnung $N$ von dem Betrag $Ast$ der astigmatischen Wirkung und die Koeffizienten $b_i$ bevorzugt mittels Polynome der Ordnung $N$ von der sphärischen Wirkung $Sph$ ab.

Vorzugsweise umfassen die individuellen Rezeptdaten die Achslage $A$ der astigmatischen Wirkung. Der Gesamtperformancefaktor $P$ kann vorzugsweise zusätzlich durch eine Multiplikation mit einem dritten Performancefaktor $P_3(A) = A_1 * \sin^2 A + A_2 * \cos^2 A$ erhalten werden, wobei die Koeffizienten $A_1$ und $A_2$ mittels Polynome der Ordnung $N$ von der sphärischen $Sph$ Wirkung und dem Betrag $Ast$ der astigmatischen Wirkung abhängen.

Weiter bevorzugt umfassen die individuellen Rezeptdaten den Betrag $Prism$ der prismatischen Wirkung. Der Gesamtperformancefaktor kann vorzugsweise zusätzlich durch eine Multiplikation mit einem vierten Performancefaktor $P_4 = \sum_{i=0}^{N} c_i * Prism^i$ erhalten werden, wobei die Koeffizienten $c_i$ mittels Polynome der Ordnung $N$ von dem Betrag $Ast$ der astigmatischen Wirkung und der sphärischen Wirkung $Sph$ abhängen.

Bevorzugt umfassen ferner die individuellen Rezeptdaten die Basislage $B$ der prismatischen Wirkung. Der Gesamtperformancefaktor kann vorzugsweise zusätzlich durch eine Multiplikation mit einem fünften Performancefaktor $P_5(B) = B_1 * \sin^2 B + B_2 * \cos^2 B$ erhalten wird.

Weiter bevorzugt umfassen die individuellen Trägerdaten den Homhautscheitelabstand des Brillenträgers. Der Gesamtperformancefaktor kann zusätzlich durch eine Multiplikation mit einem sechsten Performancefaktor $P_6(HSA) = \sum_{i=0}^{N} d_i * HSA^i$ erhalten werden.

Bevorzugt umfassen ferner die individuellen Trägerdaten die Vorneigung $V$ des Gleitsichtglases angeordnet in einer vorgegebenen Brillenfassung. Der Gesamtperformancefaktor wird vorzugsweise zusätzlich durch eine Multiplikation mit einem siebten Performancefaktor $P_7(V) = \sum_{i=0}^{N} e * V^i$ erhalten.

Ferner bevorzugt umfassen die individuellen Trägerdaten den Fassungsscheibenwinkel einer vorgegebenen Brillenfassung, in welcher das Gleitsichtglas angeordnet ist. Der Gesamtperformancefaktor wird vorzugsweise zusätzlich durch eine Multiplikation mit einem achten Performancefaktor

$$P_8(FSW) = \sum_{i=0}^{N} f_i * FSW^i \text{ erhalten.}$$

Bevorzugt umfassen die individuellen Trägerdaten die Pupillendistanz *PD* des Brillenträgers. Der Gesamtperformancefaktor kann ferner zusätzlich durch eine Multiplikation mit einem neunten Performancefaktor

$$P_9(PD) = \sum_{i=0}^{N} g_i * PD^i \text{ erhalten werden.}$$

Gemäß einer weiteren bevorzugten Ausführungsform umfassen die individuellen Rezeptdaten die Addition *ADD* des Gleitsichtglases. Der Gesamtperformancefaktor wird vorzugsweise zusätzlich durch eine Multiplikation mit einem zehnten Performancefaktor

$$P_{10}(ADD) = \sum_{i=0}^{N} h_i * ADD^i \text{ erhalten.}$$

Weiter bevorzugt werden die Performancefaktoren $P_i = P_i(Sph, Ast, ...)$, i=1,2,...10 für eine Mehrzahl von individuellen Parametern für jede Qualitätsklasse vorab berechnet und vorzugsweise in einer Datenbank gespeichert werden.

Vorzugsweise werden die Performancefaktoren $P_i = P_i(Sph, Ast, ...)$, i =1,2,... mittels eines numerischen Fits bzw. Anpassung bzw. Angleichung der Daten der relativen Blickfeldgröße der Gleitsichtgläser der jeweiligen Qualitätsklasse für eine Mehrzahl von Kombinationen der individuellen Parameter ermittelt, wobei die relative Blickfeldgröße für eine vorgegebene Kombination von individuellen Parameter als das Verhältnis der Blickfeldgröße eines Gleitsichtglases der jeweiligen Qualitätsklasse für die vorgegebene Kombination von individuellen Parameter und einer vorgegebenen Soll-Blickfeldgröße definiert ist.

Vorzugsweise weist die erfindungsgemäße Vorrichtung ferner Eingabemittel zum Eingeben der individuellen Parametern und/oder Anzeigemittel zum Anzeigen der berechneten Gesamtperformancefaktoren der Qualitätsklassen auf.

Vorzugsweise zeigt das Anzeigemittel den berechneten Gesamtperformancefaktoren als Balken an, deren Länge mit dem berechneten Gesamtperformancefaktor korreliert.

Gemäß der Erfindung wird ferner eine grafische Benutzerschnittstelle bzw. graphische Benutzerinterface (graphical user interface, GUI) zum Darstellen der Performance bzw. des Wirkungseffekts bzw. des Leistungseffekts von Gleitsichtgläsern bereitgestellt, und zwar unter Berücksichtigung individueller Parameter eines bestimmten Brillenträgers; umfassend:

- zumindest einen Rezeptdateneingabeabschnitt zum Eingeben von individuellen Rezeptdaten, insbesondere Addition, sphärische, astigmatische und/oder prismatische Wirkung eines Gleitsichtglases; und/oder

- zumindest einen Trägerdateneingabeabschnitt zum Eingeben von individuellen Trägerdaten des Brillenträgers, insbesondere, Vorneigung, Fassungsscheibenwikel, Hornhautscheitelabstand und/oder Pupillendistanz; und

- zumindest einen Performanceanzeigeabschnitt zum Darstellen von Gesamtperformancefaktoren *P* für jede Qualitätsklasse von Gleitsichtgläsern in Abhängigkeit von den individuellen Rezeptdaten und/oder individuellen Trägerdaten, wobei der Gesamtperformancefaktor *P* mit der Qualität der monokularen

Sehschärfe und/oder des binokularen Seheindrucks.

Alle Gleitsichtgläser aller Qualitätsklassen weisen ein im wesentlichen gleiches Grunddesign auf, wobei sich die Qualitätsklassen in der Art und Weise der Optimierung der Gleitsichtgläser in der Qualitätsklasse in Abhängigkeit von den individuellen Parameter unterscheiden.

Die individuellen Rezeptdaten umfassen die sphärische Wirkung *Sph* und den Betrag *Ast* der astigmatischen Wirkung umfassen. Der Gesamtperformancefaktor *P* wird durch eine Multiplikation von zumindest einem ersten Performancefaktor $P_1(Sph)$ und einem zweiten $P_2(Ast)$ Performancefaktor erhalten, wobei der erste Pertormancefaktor $P_1$ eine Funktion

$$P_1(Sph) = \sum_{i=0}^{N} a_i * Sph^i \text{ der sphärischen Wirkung}$$

*Sph* ist; der zweite Performancefaktor eine Funktion

$$P_2(Ast) = \sum_{i=0}^{N} b_i * Ast^i \text{ des Betrags } Ast \text{ der astig-}$$

matischen Wirkung ist; und die Koeffizienten $a_i$ mittels Polynome der Ordnung *N* von dem Betrag *Ast* der astigmatischen Wirkung und die Koeffizienten $b_i$ mittels Polynome der Ordnung *N* von der sphärischen Wirkung *Sph* abhängen.

Vorzugswiese werden die Gesamtperformancefaktoren als Balken, deren Länge mit dem berechneten Gesamtperformancefaktor korreliert, angezeigt.

Die Erfindung wird im folgenden unter Bezugnahme auf die beigefügten Zeichnungen beispielhaft beschrieben. Es zeigen:

Fig. 1 ein Flußdiagramm eines bevorzugten Ausführungsbeispiels des erfindungsgemäßen Verfahrens;

Fig. 2 ein Flußdiagramm des Berechnens bzw. Ermittelns des Gesamtperformancewertes;

Fig. 3 die Abhängigkeit der relativen Blickfeldgröße (in Prozent) von der sphärischen Wirkung;

Fig. 4 die Abhängigkeit der Größe des Fernbereichs des Blickfeldes eines Gleitsichtglases mit einer sphärischen Wirkung von -1,0 dpt und einer Addition von 2,00 dpt von der Vorneigung;

Fig. 5 die Abhängigkeit der Größe des Fernbereichs des Blickfeldes eines Gleitsichtglases mit einer sphärischen Wirkung von -5,0 dpt und einer Addition von 2,00 dpt von dem Fassungsscheibenwinkel;

Fig. 6 die Abhängigkeit der Größe des Nahbereichs des Blickfeldes eines Gleitsichtglases mit einer sphärischen Wirkung von -5,0 dpt und einer Addition von 2,00 dpt von dem Fassungsscheibenwinkel;

Fig. 7 die Abhängigkeit Größe des Nahbereichs des Blickfeldes eines Gleitsichtglases mit einer sphärischen Wirkung von -1,0 dpt und einer Addition von 2,00 dpt von dem Fassungsscheibenwinkel;

Fig. 8 die Abhängigkeit der Größe des Nahbereichs des Blickfeldes eines Gleitsichtglases mit einer sphärischen Wirkung von -1,0 dpt und einer Addition von 2,00 dpt von der Pupillendistanz;

Fig. 9: Eingabefeld für die individuellen Rezeptwerte einer Ausführungsform des erfindungsgemäßen Benutzter-Interface Tools;

Fig. 10: Eingabefeld für die individuellen Parameter einer Ausführungsform des erfindungsgemäßen Benutzter-Interface Tools;

Fig. 11: Eingabefeld für die berechnete Performancewerte einer Ausführungsform des erfindungsgemäßen Benutzer-Interface Tools;

Fig. 12A: Darstellung des Blickfeldes eines Gleitsichtglases der Qualitätsklasse ILT;

Fig. 12B: Darstellung des Blickfeldes eines Gleitsichtglases der Qualitätsklasse Multigressiv;

Fig. 12C Darstellung des Blickfeldes eines Gleitsichtglases der Qualitätsklasse GB;

Fig. 12D: Darstellung des Blickfeldes eines Gleitsichtglases der Qualitätsklasse FL;

Fig. 13: schematische Darstellung eines Beispiels einer erfindungsgemäßen Vorrichtung.

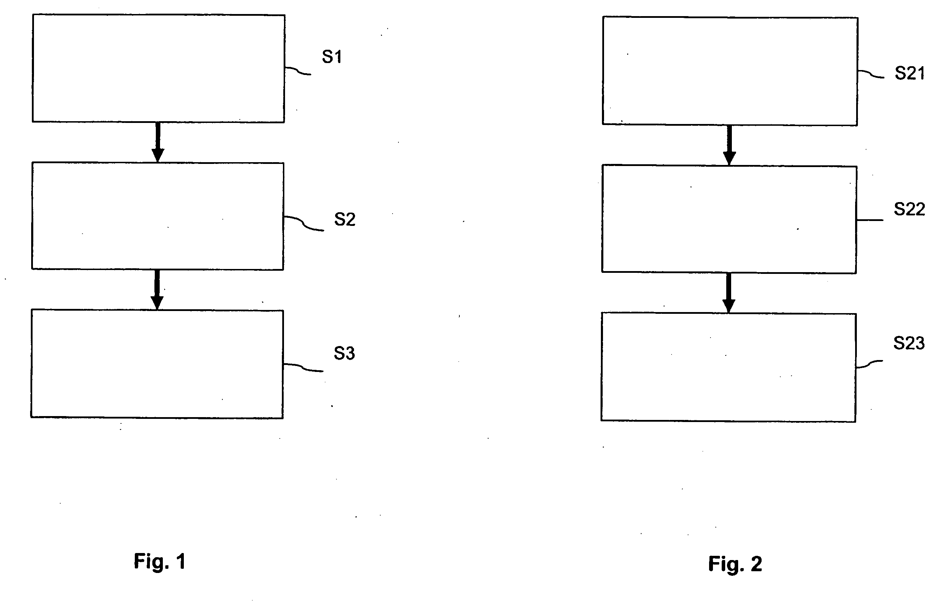

Fig. 1 stellt ein Flußdiagramm eines bevorzugten Beispiels des erfindungsgemäßen Verfahrens zur computergestützten Auswertung bzw. Ermittelung der Performance bzw. des Wirkungseffekts bzw. des Leistungseffekts zumindest eines Gleitsichtglases dar.

In einem ersten Schritt S1 werden die individuellen Parameter $\{Sph_a, Ast_a, A_a, ...\}$ des Brillenträgers erfaßt, insbesondere durch Eingabe durch einen Benutzer mittels einer (bevorzugt graphischen) Eingabeschnittstelle (GUI). Die individuellen Parameter umfassen insbesondere individuelle Rezeptdaten und/oder individuelle Trägerdaten des Brillenträgers. Die individuellen Rezeptdaten umfassen insbesondere sphärische Wirkung bzw. Verordnung, astigmatische Wirkung bzw. Verordnung (Zylinder und Achse), prismatische Wirkung bzw. Verordnung (Prisma und/oder Basislage) und/oder Addition. Die individuellen Trägerdaten umfassen insbesondere Daten charakterisierend die Augen des Brillenträgers bzw. deren Eigenschaften (z.B. Pupillendistanz, Hornhautscheitelabstand) und/oder Daten charakterisierend die Anordnung des Brillenglases vor den Augen des Brillenträgers (z.B. Vorneigung des Brillenglases, Fassungsscheibenwinkel, etc.).

In einem zweiten Schritt S2 wird einen Gesamtperformancefaktor $P$ für jeweils mindestens zwei Qualitätsklassen von Gleitsichtgläsern in Abhängigkeit von den erfassten individuellen Parametern $\{Sph_a, Ast_a, A_a, ...\}$ berechnet. Der Gesamtperformancefaktor bzw. -wert bzw. der Gesamtwirkungseffekt bzw. Gesamtleistungseffekt $P$ korreliert mit der Qualität der monokularen Sehschärfe und/oder des binokularen Seheindrucks. In anderen Worten können mittels des Gesamtperformencefaktors Rückschlüsse über die Qualität bzw. der Leistungsfähigkeit der einzelnen Qualitätsklassen gezogen werden, um insbesondere deren Geeignetheit zu prüfewn bzw. darzustellen.

Die Abhängigkeit des Gesamtperformancefaktors $P$ von den individuellen Parametern wird bevorzugt durch eine Gesamtperformancefunktion beschrieben. Die Gesamtperformancefunktion wird vorzugsweise (zumindest teilweise) vorab ermittelt und (zumindest teilweise) gespeichert. Die Gesamtperformancefunktion der einzelnen Qualitätsklassen können in dem selben Computer, welcher das Verfahren zur Auswertung der Performance von Gleitsichtgläsern gespeichert werden. Die Gesamtperformancefunktionen können (alternativ oder zusätzlich) ebenfalls in einer externen Datenbank gespeichert werden, auf die z.B. über ein mono-, bi bzw. multidirektionales Netzwerk (z.B. über das Internet) zugegriffen werden kann. Die Gesamtperformancefaktoren können dann vorzugsweise online (d.h. während der Ausführung des Verfahrens selber) ermittelt werden. Die Ermittlung der Gesamtperformancefunktion wird nachfolgend in mehr Detail im Bezug auf Fig. 2 beschrieben.

Ein dritter Schritt S3 umfasst ein Ausgeben des berechneten Gesamtperformancefaktors $P$ für jede der Qualitätsklassen, bevorzugt für jede der vorhandenen Qualitätsklassen. Vorzugsweise werden die berechneten Gesamtperformancefaktoren für jede der angezeigten Qualitätsklassen als Balken, deren Länge mit der Größe des jeweiligen Gesamtperformancefaktors korreliert, mittels einer graphischen Benutzerschnittstelle bzw. -ausgabe auf einer Anzeigeeinrichtung (z.B. einem Bildschirm, einem Ausdruck oder dgl.) dargestellt.

Fig. 2 stellt ein Flußdiagramm dar, welches in größerem Detail das Berechnen bzw. die Ermittlung der Gesamtperformancefunktion illustriert.

In einem ersten Schritt S21 wird ein Grunddesign ausgewählt, welches vorzugsweise für alle Qualitätsklassen von Gleitsichtgläsern und/oder für jede Kombination von individuellen Parametern im wesentlichen beibehalten wird. So kann bevorzugt sichergestellt werden, daß die Differenzen in den ermittelten Gesamtperformancefaktoren der einzelnen Qualitätsklassen einzig und allein auf der Technologie bzw. Optimierung der Gleitsichtgläser in der Qualitätsklasse beruhen und nicht auf dem gewählten Grunddesign, welches z.B. härter mit großen Blickfeldbereichen oder weicher mit kleineren Blickfeldbereichen ausgewählt werden kann.

Das Grunddesign kann ein hartes, ein weiches und/oder ein ausgewogenes. Design sein. Das Grunddesign kann vorzugsweise in Form von Fehlerverteilung (en) definiert werden, welche bei der Optimierung eines der Qualitätsklasse zugeordneten Gleitsichtglases für unterschiedliche individuelle Parameter als Ziel- bzw. Soll-Vorgabe(n) eingesetzt werden. Vorzugsweise umfaßt das Grunddesign eine Ziel- bzw. Soll-Vorgabe für das Blickfeld bzw. ein Ziel- bzw. Soll-Blickfeld des Gleitsichtglases. Ferner kann das Grunddesign eine Verteilung der Refraktions- und/oder astigmatischen Fehler umfassen. Ferner umfaßt das Grunddesign vorzugsweise eine Verteilung der Vergrößerung, der anamorphotischen Verzehrung, des Vertikal- und/oder Horizontalprisma, des Gradienten des Brechwerts und/oder des Astigmatismus.

Bei vorgegebenen Durchschnittsparametern weisen vorzugsweise alle Gleitsichtgläser aller Qualitätsklassen im wesentlichen die gleichen optischen Eigenschaften, insbesondere ein im wesentlich gleiches Blickfeld auf. Vorzugsweise ist das Blickfeld der Gleitsichtgläser aller Qualitätsklassen bei den vorgegebenen Durchschnittsparametern im wesentlich identisch mit dem Soll-Blickfeld. Die einzelnen Qualitätsklassen unterscheiden sich dann durch die Art und Weise der Optimierung der Gleitsichtgläser in der jeweiligen Qualitätsklasse in Abhängigkeit von den individuellen Parametern.

Typische Durchschnittsparameter sind beispielsweise:

| | |
|---|---|
| Sphärische Wirkung: | 0,50 dpt |
| Zylindrische Wirkung: | 0,00 dpt |
| Achslage: | 0 Grad |
| Prisma: | 0,00 cm/m |
| Basislage: | 0 Grad |
| Pupillendistanz: | 64 mm |
| Hornhautscheitelabstand: | 13 mm |
| Vorneigung: | 7 Grad |
| Fassungsscheibenwinkel: | 5 Grad |
| Augendrehpunktsabstand: | 28,5 mm |

In Abhängigkeit von der Art und Weise der Optimierung der Gleitsichtgläser in der jeweiligen Qualitätsklasse können beispielsweise folgende Qualitätsklassen gebildet werden:

**Qualitätsklasse FL**

Die Qualitätsklasse FL umfaßt konventionelle Scheitelmessstellungsgläser bzw. konventionelle flächenoptimierte Gleitsichtgläser. Die progressive Fläche der Gleitsichtgläser in dieser Qualitätsklasse wird lediglich für eine vorgegebene Rezeptwirkung, d.h. für eine vorgegebene Kombination von sphärischer, astigmatischer und prismatischer Wirkung optimiert. Es erfolgt keine Berücksichtigung der individuellen Parameter, wie individuellen Rezeptdaten (sphärische, astigmatische und/oder prismatische Wirkung) und individuellen Trägerdaten des Brillenträgers (Hornhautscheitelabstand, Pupillendistanz etc.). Die Optimierung der progressiven Fläche erfolgt ferner lediglich unter Berücksichtigung von Flächenwerten (insbesondere Verteilung des Flächenbrechwerts und Flächenastigmatismuses) der progressiven Fläche und nicht unter Berücksichtigung der Eigenschaften (Gebrauchswerte) des Brillenglases in Gebrauchsstellung (insbesondere Brechkraft und Astigmatismus des Gleitsichtglases in Gebrauchsstellung).

Die Basiskurven der progressiven Fläche werden im wesentlichen durch eine Überlagerung der progressiven Fläche mit einer sphärischen Fläche erzeugt. Die Anpassung des Gleitsichtglases an das Rezept bzw. an die Rezeptdaten wird durch Überlagerung mit einer sphärischen/torischen Rezeptfläche durchgeführt.

Bei der Berechnung der sphärischen/torischen Rezeptfläche werden ebenfalls keine individuellen Parameter berücksichtigt.

Beispiele von im Markt erhältlichen konventionellen Gleitsichtgläsern, welche der Qualitätsklasse FL zugeordnet werden können, sind Progressiv R und S der Firma Rodenstock GmbH oder Essilor Comfort, Essilor Panamic der Firma Essilor.

**Qualitätsklasse GB**

Die Qualitätsklasse GB umfaßt konventionelle gebrauchsstellungsoptimierte Gleitsichtgläser.

Die Wirkungen der Gleitsichtgläser werden in Intervallen bzw. Bereichen eingeteilt. Alle Gleitsichtgläser eines Wirkungsintervalls weisen die (im wesentlichen) gleiche Basiskurve auf.

Die progressive Fläche der Gleitsichtgläser in dieser Qualitätsklasse wird für eine Mehrzahl von Kombinationen von Basiskurve und Addition unter Berücksichtigung der Eigenschaften des Gleitsichtglases in Gebrauchsstellung (insbesondere hinsichtlich der Verteilung des Gebrauchswerts und des Astigmatismus in Gebrauchsstellung) optimiert, wobei die Optimierung unter Berücksichtigung der sphärischen Wirkung für die Mitte der jeweiligen Basiskurve erfolgt. Bei der Optimierung erfolgt jedoch keine Berücksichtigung der individuellen Rezeptwirkung (individuelle sphärische, astigmatische und/oder prismatischen Wirkung) sowie keine Berücksichtigung der individuellen Trägerdaten des Brillenträgers (Hornhautscheiteiabstand (HSA), Pupillendistanz (PD), etc.).

Die Anpassung an die individuelle Rezeptwirkung bzw. an die individuellen Rezeptdaten wird durch Überlagerung mit einer sphärischen/torischen Rezeptfläche durchgeführt. Bei der Berechnung der sphärischen/torischen Rezeptfläche werden ebenfalls keine individuellen Parameter berücksichtigt.

Beispiele für im Markt erhältliche konventionelle Gleitsichtgläser dieser Qualitätsklasse sind Progressiv life, Progressiv life XS der Firma Rodenstock GmbH oder Zeiss Gradal HS, Zeiss Gradal RD der Firma Carl Zeiss AG.

## Qualitätsklasse MG:

Die Qualitätsklasse Multigressiv (MG) umfaßt wirkungsoptimierte Gleitsichtgläser. Die Optimierung der Gleitsichtgläser dieser Qualitätsklasse erfolgt unter Berücksichtigung der individuellen Rezeptdaten, d.h. der individuellen sphärischen, astigmatischen und/oder prismatischen Wirkung des Gleitsichtglases. Es erfolgt jedoch keine Berücksichtigung der individuellen Trägerdaten des Brillenträgers (Hornhautscheitelabstand (HSA), Pupillendistanz (PD), Vorneigung, Fassungsscheibenwikel (FSW), etc.).

Beispiele für im Markt erhältliche konventionelle Gleitsichtgläser der Qualitätsklasse MG sind Multigressiv ILT, Multigressiv ILT XS, Multigressiv 2 der Firma Rodenstock GmbH oder Zeiss Gradal TOP OSD der Firma Carl Zeiss AG.

## Qualitätsklasse ILT

Die Qualitätsklasse ILT umfaßt Individuelle Gleitsichtgläser. Bei der Optimierung der Gleitsichtgläser dieser Qualitätsklasse werden sowohl die individuellen Rezeptdaten (individuelle sphärische, astigmatische und/oder prismatische Wirkung) als die individuellen Trägerdaten des Brillenglasträgers (Hornhautscheitelabstand (HSA), Pupillendistanz (PD), Vorneigung und/oder Fassungsscheibenwinkel, etc) berücksichtigt.

Beispiele für konventionelle Gleitsichtgläser dieser Qualitätsgruppe sind Impression ILT, Impression ILT XS der Firma Rodenstock GmbH oder Zeiss Gradal Individual, short der Firma Carl Zeiss AG.

Um die monokulare Sehschärfe und/oder den binokularen Seheindruck zu quantifizieren, kann beispielsweise folgendermaßen vorgegangen werden:

Es wird ein Ausgangsblickfeld definiert, dessen Zentrum beispielsweise etwa 8 Grad unter der Nullblickrichtung liegt und insbesondere ungefähr mit dem Prismenbezugspunkt zusammenfällt. Dieser Punkt fällt insbesondere auch ungefähr mit der Hauptblickrichtung von ca. 5 bis 10 Grad unter Nullblickrichtung zusammen. Das Ausgangsblickfeld weist eine im wesentlichen elliptische Form auf mit einer vertikalen Ausdehnung von etwa 70 Grad und einer horizontalen Ausdehnung von etwa 84 Grad. Somit ergibt sich eine maximale Blickauslenkung nach oben von etwa 27 Grad, nach unten von etwa 43 Grad und nasal bzw. temporal von etwa 42 Grad.

Weiterhin wird das nutzbare Ausgangsblickfeld durch eine Brillenfassung begrenzt. Hierzu kann beispielsweise eine Standardellipse mit einer vertikalen Höhe von etwa 40 mm und einer horizontalen Ausdehnung von 50 mm gewählt werden. Bei einem Standard-Hornhautscheitelbastand (HSA) stimmt die so gewählte Brillenfassung ungefähr mit dem Ausgangsblickfeld überein.

Bei großen Hornhautscheitelabständen wird das nutzbare Ausgangsblickfeld durch die Brillenfassung begrenzt und bei kleinen Homhautscheitelabständen durch die maximal möglichen Blickwinkel des Ausgangsblickfeldes.

Das Blickfeld kann vorzugsweise in drei Bereiche unterteilt werden:

  a. Fernbereich: der Bereich innerhalb des durch die Fassung beschränkten beschränkten Ausgangsblickfeldes oberhalb einer horizontalen Fern-Begrenzungslinie $H_F$, dessen relative Sehschärfeminderung $V > V_{Grenze}$ ist;

  b. Nahbereich: der Bereich innerhalb des durch die Fassung beschränkten Ausgangsblickfeldes unterhalb einer horizontalen Nah-Begrenzungslinie $H_N$, dessen relative Sehschärfeminderung $V > V_{Grenze}$ ist.

  c. Zwischenbereich: der Bereich innerhalb des durch die Fassung beschränkten Ausgangsblickfeldes zwischen den oben genannten horizontalen Begrenzungslinien, dessen relative Sehschärfeminderung $V > V_{Grenze}$ ist.

Der Gesamtsehbereich des Blickfeldes wird als der Bereich innerhalb des Ausgangsblickfeldes, dessen relative Sehschärfeminderung $V > V_{Grenze}$ ist, definiert. Die relative Sehschärfeminderung $V$ ist als Quotient der Sehschärfe beim Blick durch das Gleitsichtglas und der Ausgangssehschärfe mit Vollkorrektion definiert.

Die Sehschärfegrenze $V_{Grenze}$ kann vorzugsweise jeweils die Werte zwischen etwa 0,8 und 0,9 bei einem Ausgangsvisus von jeweils etwa 1,25 bis 2,0 annehmen. Besonders bevorzugt beträgt der Ausgangsvisus einen Wert von etwa 2,0 und die Sehschärfegrenze $V_{Grenze}$ einen Wert von etwa 0,9.

Die Begrenzungslinie $H_F$ weist vorzugsweise eine Höhe auf, bei der an der Hauptlinie die mittlere Fernverordnung plus etwa 0,13 dpt erreicht wird. Die Begrenzungslinie $H_N$ weist vorzugsweise eine Höhe auf, bei der an der Hauptlinie die mittlere Femverordnung plus etwa 0,85*Addition erreicht wird.

Die monokulare Sehschärfe korreliert mit (bzw. variiert mit) der Größe des Blickfeldes (Blickfeldgröße). Die Blickfeldgröße kann als die Größe des Gesamtbereichs berechnet werden. Vorzugsweise ist jedoch die Blickfeldgröße eine Funktion, vorzugsweise eine gewichtete Summe der Größen der einzelnen Blickfeldbereiche (Nahbereich, Zwischenbereich, Fernbereich). Dadurch ist es vorteilhaft möglich, ein Missverhältnis der Größen der einzelnen Bereiche (z.B. sehr großer Fembereich, jedoch sehr kleiner oder fehlender Nahbereich), welches dennoch zu einem relativ großen Gesamtbereich führt, effektiv auszuschließen.

Aus der Blickfeldgröße kann eine relative Blickfeldgröße berechnet werden, welche vorzugsweise als prozentualer Anteil am Soll-Blickfeld ausgegeben werden kann, wobei alle Berechnungen bevorzugt in Blickwinkeln durchgeführt werden.

Der binokulare Seheindruck spiegelt die Überlappung der Blickfelder der beiden Augen und die sphärischen und astigmatischen Imbalanzen bzw. Unausgewogenheiten in den korrespondierenden Durchblickstellen wieder. Um den binokularen Seheindruck $S_{bin}$ zu berechnen, werden vorzugsweise für jede Blickrichtung der korrespondierende Durchblickpunkt und die dort auftretende sphärische und astigmatische Abweichung ermittelt bzw. berechnet. Daraus können die monokulare Sehschärfeminderung $V_L$ oder $V_R$ der linken (L) bzw. des rechten (R) Auges an dem korrespondierenden Durchblickpunkt und die aus den sphärischen und astigmatischen Imbalanzen resultierende binokulare Sehschärfeminderung $V_{bin}$ berechnet bzw. ermittelt werden. Der binokulare Seheindruck $S_{bin}$ ergibt sich aus dem Produkt der schlechteren monokularen Sehschärfeminderung $V_R$ oder $V_L$ und der binokularen Sehschärfeminderung $V_{bin}$:

$$S_{bin} = V_{bin} * \min(V_R, V_L)$$

Der binokulare Seheindruck $S_{bin}$ ist dann gut bzw. zufriedenstellend, wenn sich die Blickfelder R und L des rechten und des linken Auges überlappen und die sphärische und astigmatische Imbalanzen klein sind.

Die Berechnung der Blickfeldgrößen bzw. der relativen Blickfeldgrößen für jede Qualitätsklasse wird vorzugsweise für eine Mehrzahl von Kombinationen der individuellen Parameter durchgeführt.

In einem zweiten Schritt S22 werden die Blickfeldgröße und/oder die relative Blickfeldgröße der Gleitsichtgläser jeder untersuchten Qualitätsklasse für eine Mehrzahl von Kombinationen von individuellen Parametern berechnet. Vorzugsweise werden die Blickfeldgrößen der einzelnen Bereiche (Fern-, Nah- und Zwischenbereich) des Blickfeldes separat berechnet.

Die individuellen Parameter können vorzugsweise wie folgt etwa variiert werden:

a. sphärische Wirkung von - 7,00 bis +7,00 dpt in 1,00 dpt Schritten;
b. Zylinder (Betrag der zylindrischen Wirkung) von 0,50 bis 4,00 dpt in 0,50 dpt Schritten für die Achslage 45 Grad und in 1,00 dpt Schritten für die Achslagen 0 und 90 Grad;
c. Prisma (Betrag der prismatischen Wirkung) von 1,00 bis 5,00 cm/m in 1,00 cm/m Schritten für die Basislagen 45, 0 und 90 Grad;
d. Additionen 1,00, 2,00 und 3,00 dpt;
e. Vorneigung des Brillenglases für den Bereich 0 bis 15 Grad in 3 Grad Schritten; und/oder
f. Fassungsscheibenwinkel für den Bereich 0 bis 25 Grad in 4 Grad Schritten.

Darüber hinaus können ebenfalls folgende individuellen Parameter berücksichtigt werden:

g. Pupillendistanz für den Bereich 57 bis 72 mm in 3 mm Schritten;
h. Hornhautscheitelabstand für den Bereich 7 bis 18 mm in 3 mm Schritten;
i. Achslage der zylindrischen Wirkung von 0 bis 180 Grad in 22,5 Grad Schritten; und/oder
j. Basislage der prismatischen Wirkung von 0 bis 360 Grad in 45 Grad Schritten.

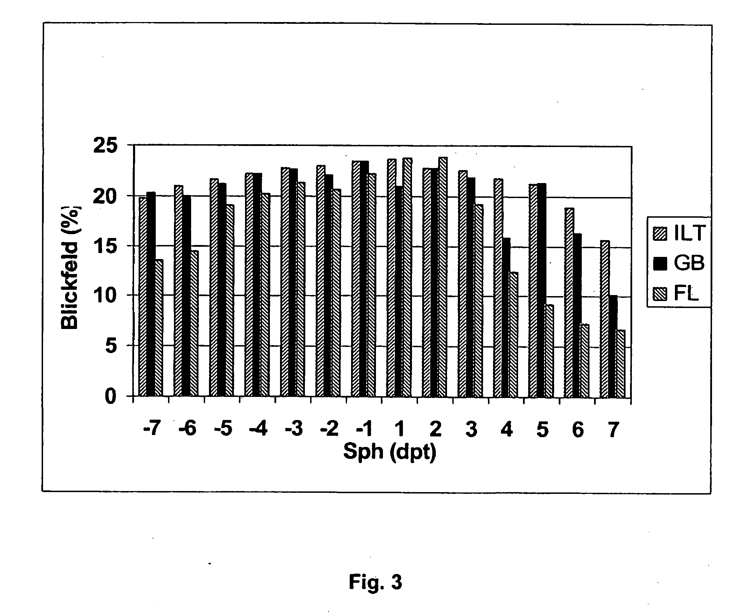

Figuren 3 bis 8 zeigen die Abhängigkeit der so berechneten relativen Blickfeldgrößen der Gleitsichtgläser der Qualitätsklassen ILT, GB und FL von den einzelnen individuellen Parametern. Wie aus Figuren 3 bis 8 ersichtlich, ändern sich die einzelnen Blickfeldbereiche der Gleitsichtgläser jeder Qualitätsklasse (auch Qualitätsklasse ILT) bei einer Änderung der individuellen Parameter (bzw. bei einer Abweichung der individuellen Parameter von den Durchschnittsparameter), was sich in einer Änderung der Blickfeldgröße bzw. der relativen Blickfeldgröße wiederspiegelt.

Fig. 3 ist ein Diagramm, welche die ermittelte relative Blickfeldgröße in Abhängigkeit von der sphärischen Wirkung zeigt. Auf der Abszisse der Fig. 3 ist die sphärische Wirkung in dpt und auf der Ordinate die relative Blickfeldgröße in Prozent aufgetragen. Wie aus Fig. 3 ersichtlich ist die relative Blickfeldgröße der Gleitsichtgläser aller Qualitätsklassen (inkl. Qualitätsklasse ILT) bei einer sphärischen Wirkung von +7,00 dpt deutlich kleiner als bei 0 dpt. Die Variation der relativen Blickfeldgröße in Abhängigkeit von der sphärischen Wirkung ist für Gleitsichtgläser der Qualitätsklassen GB und FL jedoch deutlich größer als die Variation für Gleitsichtgläser der Qualitätsklasse ILT.

Wie aus Fig. 3 ferner ersichtlich sind die Vorteile von individuellen Brillengläsern (Gleitsichtgläser der Qualitätsklasse ILT) bei Hyperopen größer als bei Myopen. In der Regel ist festzustellen, daß Gleitsichtgläser mit positiver Wirkung empfindlicher als Progressivgläser mit negativer Wirkung auf eine Änderung der sphärischen Wirkung reagieren (vgl. Fig. 3).

Ferner sind die Vorteile der Gleitsichtgläser der Qualitätsklasse ILT (individuelle Gleitsichtgläser) beim Sehen in der Nähe größer aus als beim Sehen in der Ferne.

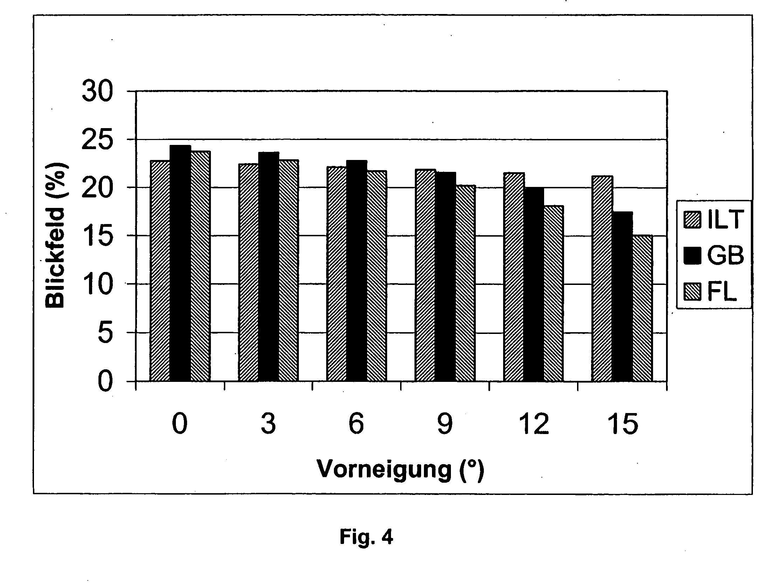

Fig. 4 ist ein Diagramm, welches den Einfluß der Vorneigung auf die Größe des Fernbereichs des Blickfeldes eines Gleitsichtglases mit einer sphärischen Wirkung von -1,0 dpt und einer Addition von 2,00 dpt illustriert. Auf der Abszisse ist die Vorneigung des Gleitsichtglases in Grad und auf der Ordinate die relative Größe des Fernbereichs des Blickfelds in Prozent aufgetragen. Die Berechnung erfolgt monokular, bei einem Ausgangsvisus von etwa 2,0 und einer Grenzwert $V_{Grenze}$ von etwa 0,9.

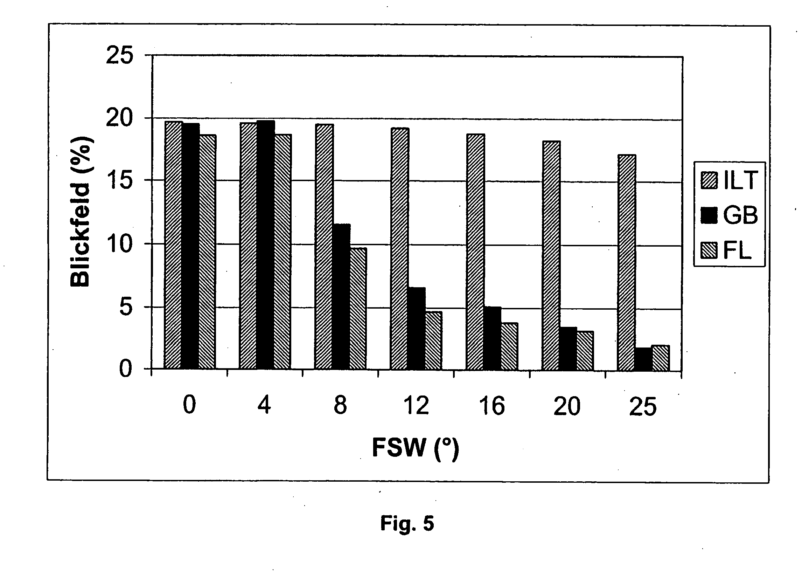

Fig. 5 ist ein Diagramm, welches den Einfluß des Fassungsscheibenwinkels auf die Größe des Fembereichs des Blickfeldes eines Gleitsichtglases mit einer sphärischen Wirkung von -5,0 dpt und einer Addition von 2,00 dpt illustriert. Auf der Abszisse ist der Fassungsscheibenwikel des Gleitsichtglases in Grad und auf der Ordinate die relative Größe des Fernbereichs des Blickfelds in Prozent aufgetragen. Die Berechnung erfolgt monokular, bei einem Ausgangsvisus von etwa 2,0 und einer Grenzwert $V_{Grenze}$ von etwa 0,9.

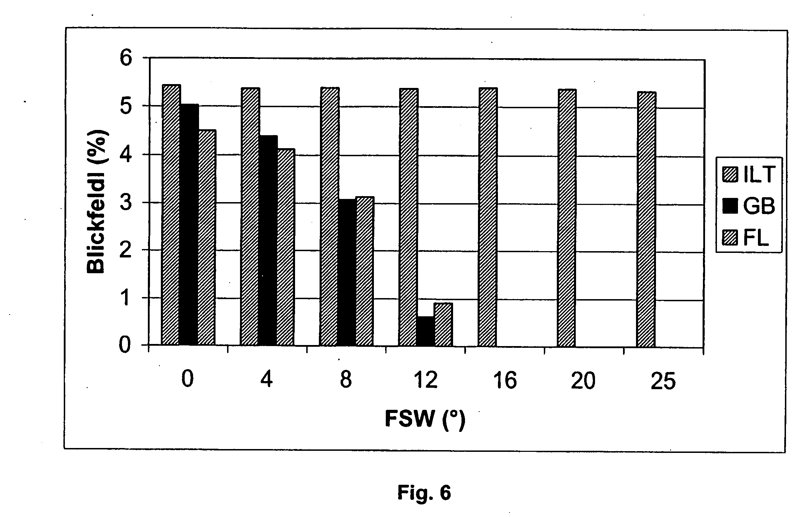

Fig. 6 ist ein Diagramm, welches den Einfluß des Fassungsscheibenwinkels auf die Größe des Nahbereichs des Blickfeldes eines Gleitsichtglases mit einer sphärischen Wirkung von -5,0 dpt und einer Addition von 2,00 dpt illustriert. Auf der Abszisse ist der Fassungsscheibenwikel des Gleitsichtglases in Grad und auf der Ordinate die relative Größe des Nahbereichs des Blickfelds in Prozent aufgetragen. Die Berechnung erfolgt monokular, bei einem Ausgangsvisus von twa 2,0 und einer Grenzwert $V_{Grenze}$ von etwa 0,9.

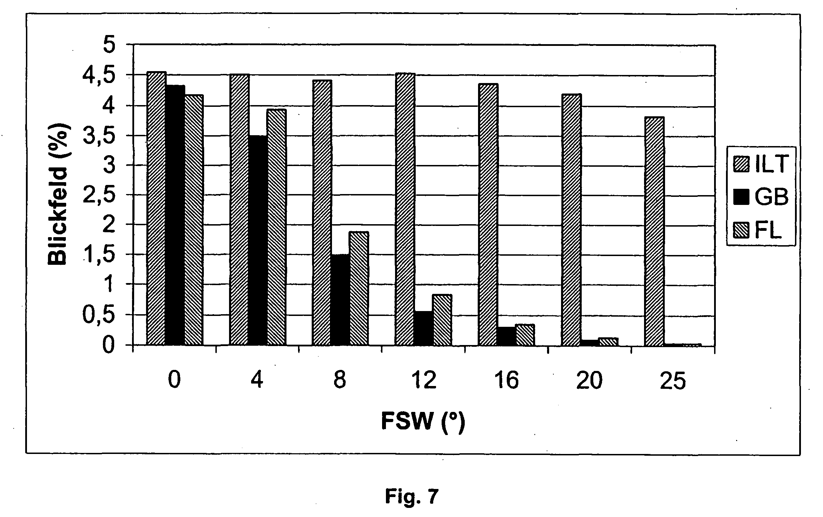

Fig. 7 ist ein Diagramm, welches den Einfluß des Fassungsscheibenwinkels auf die Größe des Nahbereichs des Blickfeldes eines Gleitsichtglases mit einer sphärischen Wirkung von -1,0 dpt und einer Addition von 2,00 dpt illustriert. Auf der Abszisse ist der Fassungsscheibenwikel des Gleitsichtglases in Grad und auf der Ordinate die relative Größe des Nahbereichs des Blickfelds in Prozent aufgetragen. Die Berechnung erfolgt binokular, bei einem Ausgangsvisus von etwa 2,0 und einer Grenzwert $V_{Grenze}$ von etwa 0,9.

Wie aus Fig. 4 bis 7 ersichtlich weisen Gleitsichtgläser der Qualitätsklassen GB und FL in der Ferne bis zu einem Fassungsscheibenwinkel von ungefähr 25 Grad noch einen monokularen Sehbereich auf. In der Nähe dagegen wiesen die Gleitsichtgläser der Qualitätsklassen FL und GB bereits ab ungefähr 12 Grad überhaupt keinen Sehbereich mehr auf.

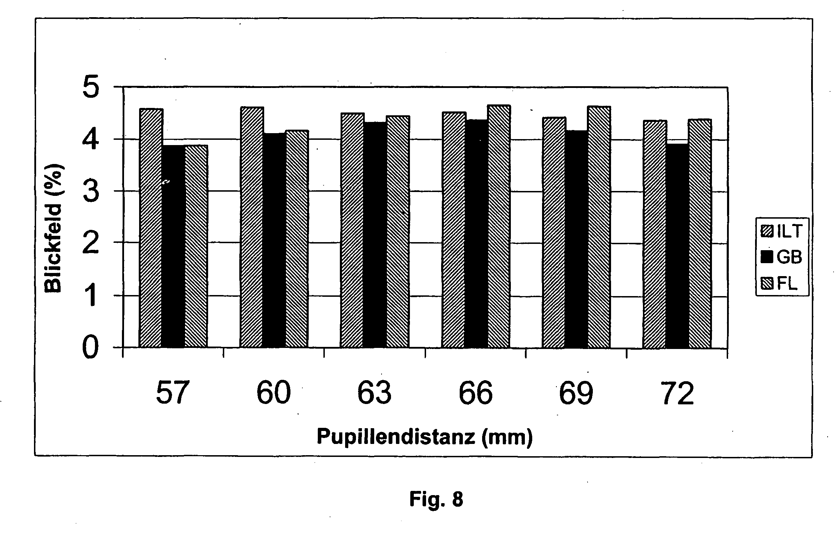

Fig. 8 ist ein Diagramm, welches den Einfluß der Pupillendistanz auf die Größe des Nahbereichs des Blickfeldes eines Gleitsichtglases mit einer sphärischen Wirkung von -1,0 dpt und einer Addition von 2,00 dpt illustriert. Auf der Abszisse ist der Pupillendistanz des Gleitsichtglases in mm und auf der Ordinate die relative Größe des Nahbereichs des Blickfelds in Prozent aufgetragen. Die Berechnung erfolgt binokular, bei einem Ausgangsvisus von etwa 2,0 und einer Grenzwert $V_{Grenze}$ von etwa 0,9.

Wie aus Fig. 8 ersichtlich hat die Pupillendistanz einen (relativ gesehen) sehr geringen Einfluß auf die Blickfeldgröße bzw. die monokulare Sehschärfe und/oder den binokulare Seheindruck.

Aufgrund der Berechnungen der Blickfeldgrößen im Schritt S22 wird eine Matrix der Blickfeldgrößen aller Gleitsichtgläser in den untersuchten Qualitätsklassen (in dem vorliegenden Fall vier Qualitätsklassen) in Abhängigkeit von den individuellen Parametern erhalten bzw. ermittelt. Die relative Blickfeldgröße der Gleitsichtgläser der jeweiligen Qualitätsklasse bei vorgegebenen individuellen Parametern wird dann als der relative Quotient zwischen der Blickfeldgröße des Gleitsichtglases mit den tatsächlichen Parametern und der Blickfeldgröße des Gleitsichtglases mit den Standardparametern (bzw. der Soll-Blickfeldgröße) berechnet.

In einem nächsten Schritt S23 werden durch die ermittelten numerischen Werte der relativen Blickfeldgrößen Funktionen (Performancefunktionen) in Abhängigkeit von der Addition, der sphärischen, der astigmatischen, der prismatischen Wirkung, der Achslage, der Basislage, des Hornhautscheitelabstandes, der Pupillendistanz, der Vorneigung und/oder des Fassungsscheibenwinkels, etc. gefittet bzw. angenähert. Vorzugsweise sind diese Performancefunktionen N Polynome der Ordnung N **(z.B.** $P(X) = \sum_{i=0}^{N} k_i * X^i$), vorzugsweise der fünfter Ordnung, oder Euler'sche Gleichungen (z.B. $P(X) = k_1 * \sin^2 X + k_2 * \cos^2 X$), wobei $P$ die Performancefunktion und $X$ das jeweilige individuelle Parameter bezeichnen.

Vorzugsweise kann eine erste Performancefunktion (Performance in Abhängigkeit von der sphärischen Wirkung) als eine Funktion der sphärischen Wirkung $Sph$ mittels eines Polynoms fünfter Ordnung dargestellt werden:

$$P_{Sph}(Sph) = \sum_{i=0}^{5} a_i * Sph^i$$

Eine zweite Performancefunktion $P_{Ast}$ (Performance als Funktion des Zylinders bzw. des Betrags der astigmatischen Wirkung) kann ebenfalls vorzugsweise als Funktion der astigmatischen Wirkung $Ast$ mittels eines Polynoms fünfter Ordnung dargestellt werden:

$$P_{Ast}(Ast) = \sum_{i=0}^{5} b_i * Ast^i$$

Die Koeffizienten $b_i$ hängen ihrerseits vorzugsweise mittels Polynome fünfter Ordnung von der sphärischen Wirkung ab.

Eine dritte Performancefunktion $P_A$ (Performance in Abhängigkeit von der Achslage der astigmatischen Wirkung) kann als Funktion der Achslage A mittels des Euler'schen Übergangs: $P_A(Ashslage) = A_1 * \sin^2 A + A_2 * \cos^2 A$ dargestellt werden. Die Koeffizienten $A_{1,2}$ der Achslage hängen vorzugsweise mittels Polynome fünfter Ordnung von der sphärischen und der astigmatischen Wirkung ab.

Auf diese Weise können für alle Parameter (sphärische und astigmatische Wirkung, Achslage, prismatische Wirkung, Basislage, Homhautscheitelabstand, Pupillendistanz, Vorneigung und/oder Fassungsscheibenwinkel, etc.) geeignete Performancefunktionen ermittelt werden.

Vorzugsweise ist jedoch eine Abhängigkeit bis zur dritten Unterebene ausreichend. So hängen beispielsweise die Koeffizienten der Performancefunktion der prismatischen Wirkung zwar von der sphärischen und astigmatischen Wirkung, jedoch nicht von der Achslage ab.

Die Gesamtperformancefunktion $P$ ergibt sich dann durch Multiplikation der einzelnen Performancefunktionen $P_{Sph}$, $P_{Ast}$, etc.:

$$P = P_{Sph} * P_{Ast} * \dots$$

Ein numerischer Fit wird für alle untersuchten (z.B. vier) Qualitätsklassen durchgeführt und somit eine Gesamtperformancefunktion $P$ für alle Qualitätsklassen erhalten. Vorzugsweise erfolgt die Berechnung der Performancefunktionen bzw. der Gesamtfunktion für jede Qualitätsklasse vorab. Die Performancefunktionen können dann in einer Datei, Datenbank und/oder in einem Speichermedium gespeichert werden.

Das erfindungsgemäße Verfahren ermöglicht es die Performance bzw. den Wirkungseffekt bzw. die Wirkungsleistung von Gleitsichtgläsern bei einer vorgegebenen Kombination von individuellen Parametern $\{Sph_a, Ast_a, A_a, \dots\}$ zu berechnen bzw. zu ermitteln, und zwar bevorzugt ohne daß die Gleitsichtgläser selbst optimiert und berechnet werden müssen.

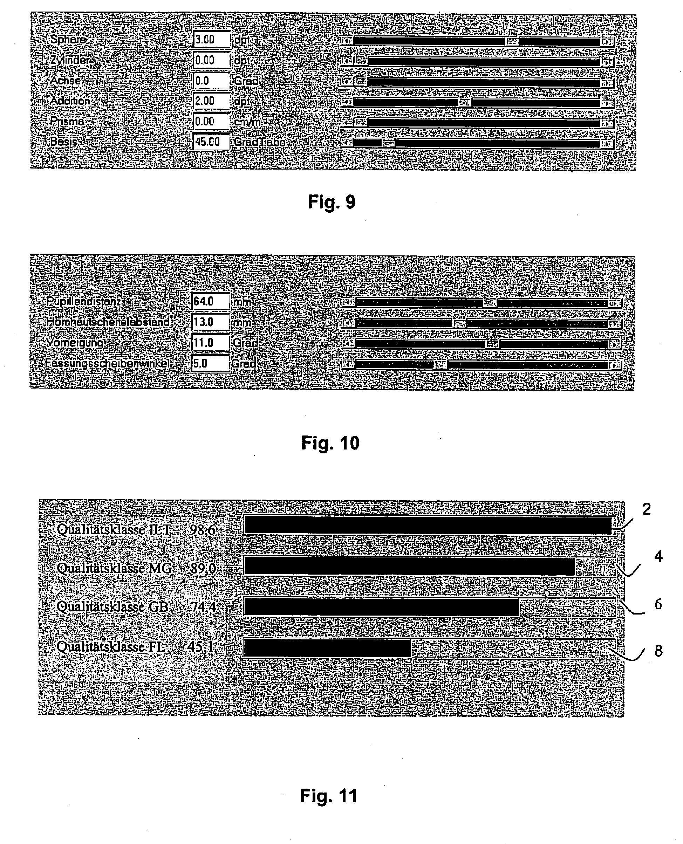

Das Verfahren zum Auswerten der Performance von Gleitsichtgläsern gemäß einer bevorzugten Ausführungsform umfasst ferner ein Eingeben der individuellen Parameter. Figur 9 zeigt ein beispielhaftes Eingabefeld für die Eingabe der individuellen Rezeptparameter einer bevorzugten graphischen Benutzerschnittstelle bzw. -interface (GUI). Fig. 10 zeigt ein beispielhaftes Eingabefeld für die individuellen Trägerdaten des Brillenträgers einer bevorzugten graphischen Benutzerschnittstelle.

Das Verfahren zum Auswerten bzw. Ermitteln der Performance von Gleitsichtgläsern gemäß dem erfindungsgemäßen Beispiel umfasst ferner ein Anzeigen der berechneten Gesamtperformancefaktoren der jeweiligen Qualitätsklasse. Vorzugsweise erfolgt das Anzeigen bzw. Ausgeben der berechneten Gesamtperformancefaktoren als Balken (siehe Fig. 11), deren Länge mit dem berechneten Gesamtperformancefaktor korreliert bzw. von diesem abhängt.

Fig. 11 zeigt ein beispielhaftes Anzeigefeld für die berechneten Wirkungseffekt- bzw. Leistungseffekt- bzw. Gesamtperformancefaktoren einer erfindungsgemäßen graphischen Benutzerschnittstelle. Die Größe der berechneten Gesamtperformancefaktoren der einzelnen Qualitätsklassen sind jeweils als Zahl und als Balken dargestellt, wobei die Länge der Balken mit der Größe des jeweiligen Gesamtperformancefaktors korreliert. In Fig. 11 bezeichnet das Bezugszeichen 2 den Gesamtperformancefaktor der Qualitätsklasse ILT; das Bezugszeichen4 den Gesamtperformancefaktor der Qualitätsklasse MG (Multigressiv), das Bezugszeichen6 den Gesamtperformancefaktor der Qualitätsklasse GB und das Bezugszeichen8 den Gesamtperformancefaktor der Qualitätsklasse FL. Die Gesamtperformancefaktoren sind für die in Figuren 10 und 11 gezeigte Kombination von individuellen Rezeptdaten und Trägerdaten eines Brillenträgers berechnet bzw. ermittelt.

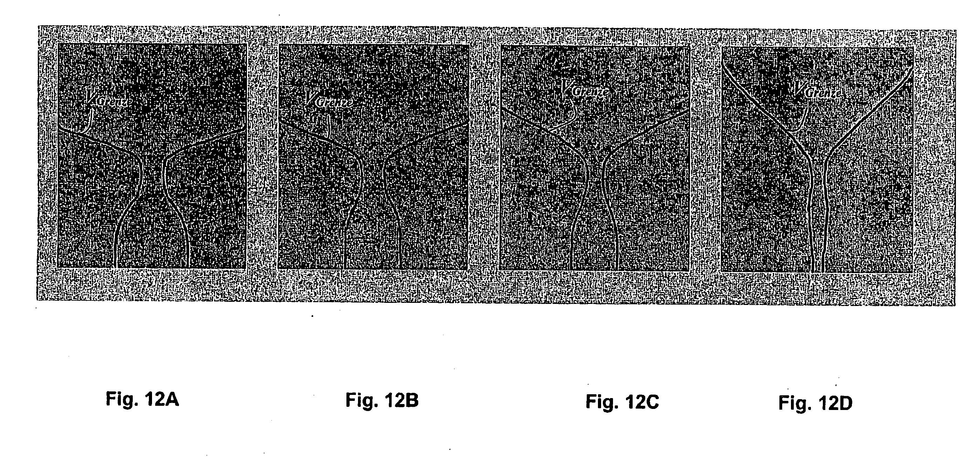

Weiter bevorzugt kann das Verfahren zum Auswerten der Performance von Gleitsichtgläsern ein Anzeigen der einzelnen Blickfelder bzw. Blickfeldbereichen für die jeweilige Qualitätsklasse bei den vorgegebenen individuellen Parametern umfassen. Figuren 12A bis 12D zeigen die Blickfelder eines Gleitsichtglases der jeweiligen Qualitätsklasse für die vorgegebenen individuellen Parameter, dargestellt in einer bevorzugten graphischen Benutzer Schnittstelle. Fig. 12A bezieht sich auf Gleitsichtgläser der Qualitätsklasse ILT, Fig. 12B auf die Qualitätsklasse Multigresiv, Fig. 12C auf die Qualitätsklasse GB und Fig. 12D auf die Qualitätsklasse FL. Angezeigt sind somit die Grenzlinien $V_{Grenze}$ des Blickfeldes.

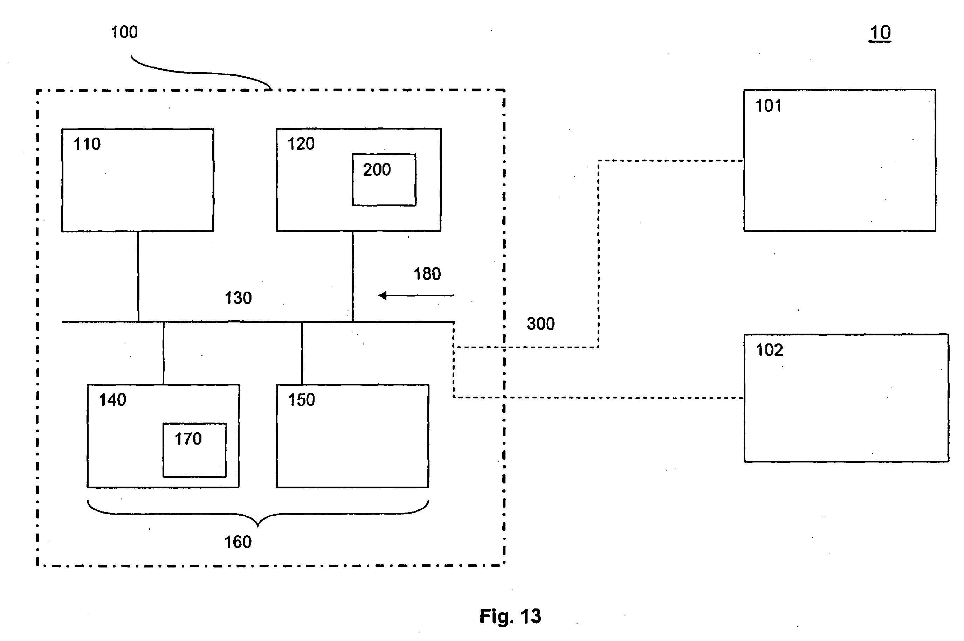

Fig. 13 zeigt eine schematische Darstellung eines Beispiels der bevorzugten Vorrichtung zur Auswertung der Performance von Gleitsichtgläsern.

Die bevorzugte Vorrichtung umfasst ein Computersystem 10, mit zumindest einem ersten Computer 100. Das Computersystem 10 kann jedoch optional eine Vielzahl von Computern 10q, q = 1, 2, ..., welche durch ein (mono-, bi- und/oder multidirektionales) Netzwerk miteinander 300 verbunden sind, umfassen.

Der Computer 100 weist einen Prozessor 110, einen Speicher 120, einen Bus 130 auf. Ferner kann der Computer 100 eine Eingabevorrichtung 140 und/oder eine Ausgabevorrichtung 150 umfassen. Die Elemente 110 bis 170 des Computers 900 verallgemeinern die entsprechenden Elemente der Computer 101, 102, etc. Der Computer 100 ist beispielsweise ein konventioneller Personalcomputer (PC), ein Multiprozessorcomputer, eine Mainframecomputer, eine tragbarer PC (laptop) oder ein stationärer PC oder dergleichen.

Weiterhin wird ein Computerprogrammerzeugnis bzw. -produkt 200 bereitgestellt, welches derart ausgelegt ist, daß es - wenn geladen und ausgeführt auf einem Computer - ein Verfahren zur Auswertung bzw.

Ermittlung der Performance eines Gleitsichtglases durchführen kann. Das Computerprogrammerzeugnis 200 kann auf einem körperlichen Speichermedium bzw. Programmträger 210 gespeichert werden. Das Computerprogrammerzeugnis kann ferner als Programmsignal vorliegen.

Der Prozessor 110 des Computers 100 ist beispielsweise ein Zentralprozessor (CPU), ein Mikrocontroller (MCU), oder ein digitaler Signalprozessor (DSP).

Der Speicher 120 symbolisiert Elemente, die Daten und Befehle entweder zeitlich begrenzt oder dauerhaft speichern. Obwohl zum besseren Verständnis der Speicher 120 als Teil des Computers 100 gezeigt ist, kann die Speicherfunktion an anderen Stellen, z.B im Prozessor selbst (z.B. Cache, Register) und/oder auch im Netzwerk 300, beispielsweise in den Computern 101/102 implementiert werden. Der Speicher 120 kann ein Read-Only-Memory (ROM), ein Random-Access-Memory (RAM), ein programmierbars oder nicht-programmierbares PROM oder ein Speicher mit anderen Zugriffsoptionen sein. Der Speicher 120 kann physisch auf einem computerlesbaren Programmträger, zum Beispiel auf:

> (a) einem magnetischen Träger (Festplatte, Diskette, Magnetband);
> (b) einem optischen Träger (CD-ROM, DVD);
> (c) einem Halbleiterträger (DRAM, SRAM, EPROM, EEPROM);

implementiert bzw. gespeichert werden.

Wahlweise ist der Speicher 120 über verschiedene Medien verteilt. Teile des Speichers 120 können fest oder austauschbar angebracht sein. Zum Lesen und Schreiben benutzt der Computer 100 bekannte Mittel wie z.B. Diskettenlaufwerke, etc.

Der Speicher 120 speichert Unterstützungskomponenten wie zum Beispiel ein Bios (Basic Input Output System), ein Betriebssystem (OS), eine Programmbibliothek, einen Compiler, einen Interpreter und/oder ein Tabellen- bzw. Textverarbeitungsprogramm. Diese Komponenten sind zum besseren Verständnis nicht dargestellt. Unterstützungskomponenten sind kommerziell verfügbar und können auf dem Computer 100 von Fachleuten installiert bzw. in diesem implementiert werden.

Der Prozessor 110, der Speicher 120, die Eingabe- und die Ausgabevorrichtung sind über zumindest einen Bus 130 verbunden und/oder wahlweise über das (mono-, bi- bzw. multidirektionale) Netzwerk 300 (z.B. das Internet) angeschlossen bzw. stehen miteinander in Verbindung. Der Bus 130 sowie das Netzwerk 300 stellen logische und/oder physische Verbindungen dar, die sowohl Befehle als auch Datensignale übertragen. Die Signale innerhalb des Computers 100 sind überwiegend elektrische Signale, wohingegen die Signale im Netzwerk elektrische, magnetische und/oder optische Signale oder auch drahtlose Funksignale sein können.

Netzwerkumgebungen (wie das Netzwerk 300) sind in Büros, unternehmensweiten Computernetzwerken, Intranets und im Internet (d.h. World Wide Web) üblich. Die physische Entfernung zwischen den Computern im Netzwerk ist ohne Bedeutung. Das Netzwerk 300 kann ein drahtloses oder ein verdrahtetes Netzwerk sein. Als mögliche Beispiele für Implementierungen des Netzwerks 300 seien hier angeführt: ein lokales Netzwerk (LAN), ein kabelloses lokales Netzwerk (WLAN), ein Wide Area Network (WAN), ein ISDN-Netz, eine Infrarotverbindung (IR), eine Funkverbindung wie beispielsweise das Universal Mobile Telecommunication System (UMTS) oder eine Satellitenverbindung. Übertragungsprotokolle und Datenformate sind bekannt. Beispiele dafür sind: TCP/IP (Transmission Control Protocol/Internet Protocol), HTTP (Hypertext Transfer Protocol), URL (Unique Resource Locator), HTML (Hypertext Markup Language), XML (Extensible Markup Language), WML (Wireless Application Markup Language), Wireless Application Protocol (WAP) usw.

Die Eingabe- und Ausgabevorrichtungen können Teil einer Benutzerschnittstelle 160 sein.

Die Eingabevorrichtung 140 steht für eine Vorrichtung, die Daten und Anweisungen zur Verarbeitung durch den Computer 900 bereitstellt. Beispielsweise ist die Eingabevorrichtung 140 eine Tastatur, eine Zeigevorrichtung (Maus, Trackball, Cursorpfeile), Mikrofon, Joystick, Scanner. Obwohl es sich bei den Beispielen allesamt um Vorrichtungen mit menschlicher Interaktion, vorzugsweise durch eine graphische Benutzerschnittstelle, handelt, kann die Vorrichtung 140 auch ohne menschliche Interaktion auskommen, wie zum Beispiel ein drahtloser Empfänger (z.B. mittels Satelliten- oder terrestrischer Antenne), ein Sensor (z.B. ein Thermometer), ein Zähler (z.B. ein Stückzahlzähler in einer Fabrik). Die Eingabevorrichtung 140 kann zum Lesen des Speichermediums bzw. Trägers 170 verwendet werden.

Die Ausgabevorrichtung 150 bezeichnet eine Vorrichtung, die Anweisungen und Daten anzeigt, die bereits verarbeitet wurden. Beispiele dafür sind ein Monitor oder eine anderer Anzeige (Kathodenstrahlröhre, Flachbildschirm, Flüssigkristallanzeige, Lautsprecher, Drucker, Vibrationsalarm). Ähnlich wie bei der Eingabevorrichtung 140 kommuniziert die Ausgabevorrichtung 150 bevorzugt mit dem Benutzer, vorzugsweise durch eine graphische Benutzerschnittstelle. Die Ausgabevorrichtung kann ebenfalls mit anderen Computern 101, 102, etc. kommunizieren.

Die Eingabevorrichtung 140 und die Ausgabevorrichtung 150 können in einer einzigen Vorrichtung kombiniert werden. Beide Vorrichtungen 140, 150 können wahlweise bereitgestellt werden.

Das Computerprogrammerzeugnis bzw. -produkt 200 umfasst Programminstruktionen und wahlweise Daten, die den Prozessor 110 unter anderem dazu veranlassen, die Verfahrensschritte des Verfahrens gemäß der Erfindung oder bevorzugte Ausführungsformen hiervon auszuführen. Mit anderen Worten, definiert das Computerprogramm 200 die Funktion des Computers 100 und dessen Interaktion mit dem Netzwerksystem 300. Das Computerprogrammerzeugnis 200 kann beispielsweise als Quellcode in einer beliebigen Programmiersprache und/oder als Binärcode in kompilierter Form (d.h. maschinenlesbaren Form) vorliegen. Ein Fachmann ist in der Lage, das Computerprogrammerzeugnis 200 in Verbindung mit jeder der zuvor erläuterten Unterstützungskomponente (z.B. Compiler, Interpreter, Betriebssystem) zu benutzen.

Obwohl das Computerprogrammerzeugnis 200 als im Speicher 120 gespeichert dargestellt ist, kann das Computerprogrammerzeugnis 100 aber auch an beliebig anderer Stelle gespeichert sein. Das Computerprogrammerzeugnis 200 kann ebenfalls auf dem Speichermedium bzw. Programmträger 170 gespeichert sein.

Das Speichermedium 170 ist beispielhaft als außerhalb des Computers 100 dargestellt. Um das Computerprogrammerzeugnis 200 auf den Computer 100 zu übertragen, kann das Speichermedium 170 in das Eingabegerät 140 eingeführt werden. Das Speichermedium 170 kann als ein beliebiger, computerlesbarer Träger implementiert werden, wie zum Beispiel als eines der zuvor erläuterten Medien (vgl. Speicher 120). Das Programmsignal 180, welches vorzugsweise über das Netzwerk 300 zum Computer 100 übertragen wird, kann ebenfalls das Computerprogrammerzeugnis 200 beinhalten bzw. ein Teil hiervon sein.

Schnittstellen zum Koppeln der einzelnen Komponenten des Computersystems 10 sind ebenfalls bekannt. Zur Vereinfachung sind die Schnittstellen nicht dargestellt. Eine Schnittstelle kann beispielsweise eine serielle Schnittstelle, eine parallele Schnittstelle, ein Gameport, ein universeller serieller Bus (USB), ein internes oder externes Modem, ein Grafikadapter und/oder eine Soundkarte aufweisen.

**Bezugszeichenliste:**

| | |
|---|---|
| S1 | Erfassen der individuellen Daten |
| S2 | Berechnen des Gesamtperformancefaktors |
| S3 | Augebenen des Gesamtperformancefaktors |
| S21 | Definieren eines Grunddesigns |
| S22 | Berechnen der relativen Blickfeldgröße in Abhängigkeit von den individuellen Parameter |
| S23 | Berechnen der Performancefunktionen |
| 10 | Computersystem |
| 100 | Computer |
| 102, 103 | Computer |
| 110 | Prozessor |
| 120 | Speicher |
| 130 | Bus |
| 140 | Ausgabevorrichtung |
| 150 | Eingabevorrichtung |
| 160 | Benutzerschnittstelle |
| 170 | Programmträger |
| 180 | Signal |
| 200 | Computerprogrammerzeugnis |
| 300 | Netzwerk |

**Patentansprüche**

1. Verfahren zur computergestützten Auswertung der Performance von Gleitsichtgläsern, und zwar unter Berücksichtigung individueller Parameter eines bestimmten Brillenträgers, wobei die individuellen Parameter zumindest individuelle Rezeptdaten umfassen,

wobei das Verfahren die folgenden Schritte umfaßt:

- Erfassen der individuellen Parameter;
- Berechnen eines Gesamtperformancefaktors $P$ für jeweils mindestens zwei Qualitätsklassen von Gleitsichtgläsern in Abhängigkeit von den individuellen Parameter, wobei der Gesamtperformancefaktors $P$ mit der Qualität der monokularen Sehschärfe und/oder des binokularen Seheindrucks korreliert und wobei alle Gleitsichtgläser aller Qualitätsklassen ein im wesentlichen gleiches Grunddesign aufweisen und sich die Qualitätsklassen in der Art und Weise der Optimierung der Gleitsichtgläser in der Qualitätsklasse in Abhängigkeit von den individuellen Parameter unterscheiden;
- Ausgeben des berechneten Gesamtperformancefaktors $P$ für die Qualitätsklassen;
- die individuellen Rezeptdaten die sphärische Wirkung $Sph$, den Betrag $Ast$ der astigmatischen Wirkung und die Achslage $A$ der astigmatischen Wirkung umfassen; und
- der Gesamtperformancefaktor $P$ durch eine Multiplikation von zumindest einem ersten Performancefaktor $P_1(Sph)$ mit einem zweiten $P_2(Ast)$ Performancefaktor erhalten wird; N

- der erste Performancefaktor $P_1$ eine Funktion

$$P_1(Sph) = \sum_{i=0}^{N} a_i * Sph^i$$ der i=0 sphärischen Wirkung $Sph$ ist;

- der zweite Performancefaktor eine Funktion

$$P_2(Ast) = \sum_{i=0}^{N} b_i * Ast^i$$ des Betrags $Ast$ der astigmatischen Wirkung ist; und

- die Koeffizienten $a_i$ mittels Polynome der Ordnung $N$ von dem Betrag $Ast$ der astigmatischen Wirkung und die Koeffizienten $b_i$ mittels Polynome der Ordnung $N$ von der sphärischen Wirkung *Sph* abhängen; und wobei
- der Gesamtpermancefaktor $P$ zusätzlich durch eine Multiplikation mit einem dritten Performancefaktor $P_3(A) = A_1 * \sin^2 A + A_2 * \cos^2 A$ erhalten wird, wobei die Koeffizienten $A_1$ und $A_2$ mittels Polynome der Ordnung $N$ von der sphärischen *Sph* Wirkung und dem Betrag *Ast* der astigmatischen Wirkung abhängen, und

wobei N eine ganze Zahl ist und N > 0.

2. Verfahren nach Anspruch 1, wobei:

- die individuellen Rezeptdaten den Betrag *Prism* der prismatischen Wirkung umfassen; und
- der Gesamtperformancefaktor zusätzlich durch eine Multiplikation mit einem vierten Performancefaktor $P_4 = \sum_{i=0}^{N} c_i * Prism^i$ erhalten wird, wobei die Koeffizienten $c_i$ mittels Polynome der Ordnung $N$ von dem Betrag *Ast* der astigmatischen Wirkung und der sphärischen Wirkung *Sph* abhängen.

3. Verfahren nach einem der vorangegangenen Ansprüche, wobei:

- die individuellen Rezeptdaten die Basislage *B* der prismatischen Wirkung umfassen; und
- der Gesamtperformancefaktor zusätzlich durch eine Multiplikation mit einem fünften Performancefaktor $P_5(B) = B_1 * \sin^2 B + B_2 * \cos^2 B$ erhalten wird.

4. Verfahren nach einem der vorangegangenen Ansprüche, wobei die individuellen Parameter ferner individuelle Trägerdaten des Brillenträgers umfassen.

5. Verfahren nach Anspruch 4, wobei:

- die individuellen Trägerdaten den Hornhautscheitelabstand *HSA* des Brillenträgers umfassen;
- und der Gesamtperformancefaktor zusätzlich durch eine Multiplikation mit einem sechsten Performancefaktor

$$P_6(HSA) = \sum_{i=0}^{N} d_i * HSA^i \text{ erhalten wird.}$$

6. Verfahren nach Anspruch 4 oder 5, wobei:

- die individuellen Trägerdaten die Vorneigung *V* des Gleitsichtglases angeordnet in einer vorgegebenen Brillenfassung umfassen; und
- der Gesamtperformancefaktor zusätzlich durch eine Multiplikation mit einem siebten Performancefaktor $P_7(V) = \sum_{i=0}^{N} e * V^i$ erhalten wird.

7. Verfahren nach einem der Ansprüche 4 bis 6, wobei:

- die individuellen Trägerdaten den Fassungsscheibenwinkel *FSW* einer vorgegebenen Brillenfassung in welcher das Gleitsichtglas angeordnet ist umfassen; und
- der Gesamtperformancefaktor zusätzlich durch eine Multiplikation mit einem achten Performancefaktor

$$P_8(FSW) = \sum_{i=0}^{N} f_i * FSW^i \text{ erhalten wird.}$$

8. Verfahren nach einem der Ansprüche 4 bis 7, wobei:

- die individuellen Trägerdaten die Pupillendistanz *PD* des Brillenträgers umfassen; und
- der Gesamtperformancefaktor zusätzlich durch eine Multiplikation mit einem neunten Performancefaktor $P_9(PD) = \sum_{i=0}^{N} g_i * PD^i$ erhalten wird.

9. Verfahren nach einem der vorangegangenen Ansprüche, wobei:

- die individuellen Rezeptdaten die Addition *ADD* des Gleitsichtglases umfassen; und
- der Gesamtperformancefaktor zusätzlich durch eine Multiplikation mit einem zehnten Performancefaktor

$$P_{10}(ADD) = \sum_{i=0}^{N} h_i * ADD^i \text{ erhalten wird.}$$

10. Verfahren nach einem der vorangegangenen Ansprüche, wobei $N \leq 5$.

11. Verfahren nach einem der vorangegangenen Ansprüche, wobei die Performancefaktoren $P_i = P_i(Sph, Ast,...), i = 1,2,...10$ für eine Mehrzahl von individuellen Parametern für jede Qualitätsklasse vorab berechnet und vorzugsweise in einer Datenbank gespeichert werden.

**12.** Verfahren nach einem der vorangegangenen Ansprüche, wobei:

die Performancefaktoren $P_i = P_i(Sph, Ast,...)$, $i = 1,2,...$ mittels eines numerischen Fits der Daten der relativen Blickfeldgröße der Gleitsichtgläser der jeweiligen Qualitätsklasse für eine Mehrzahl von Kombinationen der individuellen Parameter ermittelt werden; und wobei

- die relative Blickfeldgröße für eine vorgegebene Kombination von individuellen Parameter als das Verhältnis der Blickfeldgröße eines Gleitsichtglases der jeweiligen Qualitätsklasse für die vorgegebene Kombination von individuellen Parameter und einer vorgegebenen Soll-Blickfeldgröße, definiert ist.

**13.** Verfahren nach einem der vorangegangenen Ansprüche, umfassend ferner die Schritte:

- Eingeben der individuellen Parametern;
- Anzeigen der berechneten Gesamtperformancefaktoren der Qualitätsklassen.

**14.** Computerprogrammerzeugnis, welches Mittel zum Durchführen des Verfahrens zur Auswertung der Performance eines Gleitsichtglases mit den Merkmalen gemäß einem der Ansprüche 1 bis 13 wenn geladen und ausgeführt auf einem Computer umfasst.

**15.** Speichermedium mit darauf gespeichertem Computerprogramm, wobei das Computerprogramm Mittel zum Durchführen des Verfahrens zur Auswertung der Performance eines Gleitsichtglases mit den Merkmalen gemäß einem der Ansprüche 1 bis 13 wenn geladen und ausgeführt auf einem Computer umfasst .

**16.** Vorrichtung zur computergestützten Auswertung der Performance von Gleitsichtgläsern und zwar unter Berücksichtigung individueller Parameter eines bestimmten Brillenträgers, wobei die individuellen Parameter zumindest individuelle Rezeptdaten umfassen,

- Erfassungsmittel zum Erfassen von individuellen Parametern zu erfassen;
- Berechnungsmittel zum Berechnen eines Gesamtperformancefaktors $P$ für jeweils mindestens zwei Qualitätsklassen von Gleitsichtgläsern in Abhängigkeit von den individuellen Parameter, wobei der Gesamtperformancefaktors $P$ mit der Qualität der monokularen Sehschärfe und/oder des binokularen Seheindrucks korreliert; und wobei alle Gleitsichtgläser aller Qualitätsklassen ein im wesentlichen gleiches Grunddesign aufweisen und sich die Qualitätsklassen in der Art und Weise der Optimierung der Gleitsichtgläser in der Qualitätsklasse in Abhängigkeit von den individuellen Parameter unterscheiden;
- Ausgabemittel zum Ausgeben des berechneten Gesamtperformancefaktors $P$ für die Qualitätsklassen,

wobei

- die individuellen Rezeptdaten die sphärische Wirkung $Sph$, den Betrag $Ast$ der astigmatischen Wirkung und die $Achslage$ $A$ der astigmatischen Wirkung umfassen; und
- der Gesamtperformancefaktor $P$ durch eine Multiplikation von zumindest einem ersten Performancefaktor $P_1$ mit einem zweiten $P_2$ Performancefaktor erhalten wird;

- der erste Performancefaktor $P_1$ eine Funktion

$$P_1(Sph) = \sum_{i=0}^{N} a_i * Sph^i$$ der sphärischen Wirkung $Sph$ ist;

- der zweite Performancefaktor eine Funktion

$$P_2(Ast) = \sum_{i=0}^{N} b_i * Ast^i$$ des Betrags $Ast$

der astigmatischen Wirkung ist; und
- die Koeffizienten $a_i$ mittels Polynome der Ordnung $N$ von dem Betrag $Ast$ der astigmatischen Wirkung und die Koeffizienten $b_i$ mittels Polynome der Ordnung $N$ von der sphärischen Wirkung $Sph$ abhängen; und wobei
- der Gesamtpermancefaktor $P$ zusätzlich durch eine Multiplikation mit einem dritten Performancefaktor $P_3$ $(A) = A_1 * sin^2 A + A_2 * cos^2 A$ erhalten wird, wobei die Koeffizienten $A_1$ und $A_2$ mittels Polynome der Ordnung $N$ von der sphärischen $Sph$ Wirkung und dem Betrag $Ast$ der astigmatischen Wirkung abhängen,

wobei N eine ganze Zahl ist und N > 0.

**17.** Grafische Benutzerschnittstelle zum Darstellen der Performance von Gleitsichtgläsern und zwar unter Berücksichtigung individueller Parameter eines bestimmten Brillenträgers; umfassend:

- zumindest einen Rezeptdateneingabeabschnitt zum Eingeben von individuellen Rezeptdaten, wobei die individuellen Rezeptdaten die sphärische Wirkung *Sph,* den Betrag *Ast* der astigmatischen Wirkung und die Achslage *A* der astigmatischen Wirkung umfassen; und

- zumindest einen Performanceanzeigeabschnitt zum Darstellen von Gesamtperformancefaktoren *P* für jede Qualitätsklasse von Gleitsichtgläsern in Abhängigkeit von den individuellen Rezeptdaten und/oder individuellen Trägerdaten, wobei der Gesamtperformancefaktor *P* mit der Qualität der monokularen Sehschärfe und/oder des binokularen Seheindrucks korreliert und wobei alle Gleitsichtgläser aller Qualitätsklassen ein im wesentlichen gleiches Grunddesign aufweisen und wobei sich die Qualitätsklassen in der Art und Weise der Optimierung der Gleitsichtgläser in der Qualitätsklasse in Abhängigkeit von den individuellen Parameter unterscheiden,

wobei

- - der im Rezeptdateneingabeabschnitt dargestellte Gesamtperformancefaktor *P* durch eine Multiplikation von zumindest einem ersten Performancefaktor *P₁*(*Sph*) mit einem zweiten *P₂* (*Ast*) Performancefaktor erhalten wird;

- - den ersten Performancefaktor *P₁*, der eine

Funktion $P_1(Sph) = \sum_{i=0}^{N} a_i * Sph^i$ der sphärischen Wirkung *Sph* ist;
- - den zweite Performancefaktor, der eine Funktion

$$P_2(Ast) = \sum_{i=0}^{N} b_i * Ast^i$$ des Betrags *Ast* der astigmatischen Wirkung ist; und
- - die Koeffizienten *aᵢ*, die mittels Polynomen der Ordnung *N* von dem Betrag *Ast* der astigmatischen Wirkung abhängen und die Koeffizienten *bᵢ*, die mittels Polynomen der Ordnung *N* von der sphärischen Wirkung *Sph* abhängen, darzustellen; und wobei
- - der Gesamtpermancefaktor *P* zusätzlich durch eine Multiplikation mit einem dritten Performancefaktor $P_3(A) = A_1 * \sin^2 A + A_2 * \cos^2 A$ erhalten wird, wobei die Koeffizienten *A₁* und *A₂* mittels Polynome der Ordnung *N* von der sphärischen *Sph* Wirkung und dem Betrag *Ast* der astigmatischen Wirkung abhängen,

wobei N eine ganze Zahl ist und N > 0.

**Claims**

1. Method for the computer-assisted evaluation of the performance of progressive lenses, specifically under consideration of individual parameters of a specific spectacle wearer, wherein the individual parameters comprise at least individual prescription data, wherein the method comprises the following steps:

   • determining the individual parameters;
   • calculating a total performance factor *P* for at least two respective quality classes of progressive lenses as a function of the individual parameters, wherein the total performance factor *P* correlates with the quality of the monocular visual acuity and/or the binocular visual impression and wherein all progressive lenses of all quality classes have a largely identical base design and the quality classes differ in the manner of optimisation of the progressive lenses in the quality class as a function of the individual parameters;
   • outputting the calculated total performance factor *P* for the quality classes;
   • the individual prescription data comprise the spherical power *Sph,* the magnitude *Ast* of the astigmatic power and the axial position *A* of the astigmatic power; and
   • the total performance factor *P* is obtained by multiplying at least a first performance factor *P₁* (*Sph*) by a second *P₂(Ast)* performance factor;

   • the first performance factor *P₁* is a function

   $$P_1(Sph) = \sum_{i=0}^{N} a_i * Sph^i$$ of the spherical power *Sph*;

   • the second performance factor is a function

   $$P_2(Ast) = \sum_{i=0}^{N} b_i * Ast^i$$ of the magnitude *Ast* of the astigmatic power; and
   • the coefficients *aᵢ* are *N* order polynomial functions of the magnitude *Ast* of the astigmatic power and the coefficients *bᵢ* are *N* order polynomial functions of the spherical power *Sph*;

and wherein

   • the total performance factor *P* is additionally obtained by multiplying by a third performance factor $P_3(A) = A_1 * \sin^2 A + A_2 * \cos^2 A,$ wherein the coefficients *A₁* and *A₂* are *N* order polynomial functions of the spherical power *Sph* and of the magnitude *Ast* of the astigmatic power, and

wherein N is a whole number and N > 0.

**2.** Method according to claim 1, wherein

• the individual prescription data comprise the magnitude *Prism* of the prism action; and
• the total performance factor is additionally obtained by multiplying by a fourth performance factor $P_4 = \sum_{i=0}^{N} c_i * Prism^i,$ wherein

the coefficients $c_i$ are $N$ order polynomial functions of the magnitude *Ast* of the astigmatic power and of the spherical power *Sph.*

**3.** Method according to one of the preceding claims, wherein:

• the individual prescription data comprise the base position *B* of the prism action; and
• the total performance factor is additionally obtained by multiplying by a fifth performance factor $P_5(B) = B_1 * sin^2 B + B_2 * cos^2 B.$

**4.** Method according to one of the preceding claims, wherein the individual parameters additionally comprise individual wearer data of the spectacle wearer.

**5.** Method according to claim 4, wherein:

• the individual wearer data comprise the corneal vertex distance *HSA* of the spectacle wearer;
• and the total performance factor is additionally obtained by multiplying by a sixth performance

factor $P_6(HSA) = \sum_{i=0}^{N} d_i * HSA^i.$

**6.** Method according to claim 4 or 5, wherein:

• the individual wearer data comprise the forward inclination *V* of the progressive lens arranged in a predetermined spectacle frame; and
• the total performance factor is additionally obtained by multiplying by a seventh performance

factor $P_7(V) = \sum_{i=0}^{N} e * V^i.$

**7.** Method according to one of claims 4 to 6, wherein:

• the individual wearer data comprise the frame lens angle *FSW* of a predetermined spectacle frame, in which the progressive lens is arranged; and
• the total performance factor is additionally obtained by multiplying by an eighth performance

factor $P_8(FSW) = \sum_{i=0}^{N} f_i * FSW^i.$

**8.** Method according to one of claims 4 to 7, wherein:

• the individual wearer data comprise the pupil distance *PD* of the spectacle wearer; and
• the total performance factor is additionally obtained by multiplying by a ninth performance factor $P_9(PD) = \sum_{i=0}^{N} g_i * PD^i.$

**9.** Method according to one of the preceding claims, wherein:

• the individual prescription data comprise the addition *ADD* of the progressive lens; and
• the total performance factor is additionally obtained by multiplying by a tenth performance factor $P_{10}(ADD) = \sum_{i=0}^{N} h_i * ADD^i.$

**10.** Method according to one of the preceding claims, wherein $N \leq 5$.

**11.** Method according to one of the preceding claims, wherein the performance factors $P_1 = P_1(Sph, Ast, ...)$, $i = 1,2,...10$ are firstly calculated for a multiplicity of individual parameters for each quality class and are preferably stored in a data bank.

**12.** Method according to one of the preceding claims, wherein the performance factors $P_1 = P_1(Sph, Ast, ...)$, $i = 1,2,...$ are determined by means of a numerical fit of the data of the relative size of the field of view of the progressive lenses of the respective quality class for a multiplicity of combinations of individual parameters; and wherein

• the relative size of the field of view for a predetermined combination of individual parameters is defined as the ratio of the size of the field of view of a progressive lens of the respective quality class for the predetermined combination of individual parameters and a predetermined target size of the field of view.

**13.** Method according to one of the preceding claims, additionally comprising the steps:

• inputting the individual parameters;
• displaying the calculated total performance factors of the quality classes.

**14.** Computer program product, which when loaded and executed on a computer comprises elements for performing the method for evaluating the performance of a progressive lens with the features according to one of claims 1 to 13.

**15.** Storage medium for a computer program stored thereon, wherein when loaded and executed on a computer the computer program comprises elements for performing the method for evaluating the performance of a progressive lens with the features according to one of claims 1 to 13.

**16.** Device for the computer-assisted evaluation of the performance of progressive lenses, specifically under consideration of individual parameters of a specific spectacle wearer, wherein the individual parameters comprise at least individual prescription data,

• determination elements for determining individual parameters to be determined;
• calculation elements for calculating a total performance factor $P$ for at least two respective quality classes of progressive lenses as a function of the individual parameters, wherein the total performance factor $P$ correlates with the quality of the monocular visual acuity and/or the binocular visual impression; and wherein all progressive lenses of all quality classes have a largely identical base design and the quality classes differ in the manner of optimisation of the progressive lenses in the quality class as a function of the individual parameters;
• output elements for outputting the calculated total performance factor $P$ for the quality classes;

wherein

• the individual prescription data comprise the spherical power $Sph$, the magnitude $Ast$ of the astigmatic power and the axial position $A$ of the astigmatic power; and
• the total performance factor $P$ is obtained by multiplying at least a first performance factor $P_1$ by a second $P_2$ performance factor;

• the first performance factor $P_1$ is a function

$$P_1(Sph) = \sum_{i=0}^{N} a_i * Sph^i$$ of the spherical power $Sph$;

• the second performance factor is a function

$$P_2(Ast) = \sum_{i=0}^{N} b_i * Ast^i$$ of the magnitude $Ast$ of the astigmatic power; and
• the coefficients $a_i$ are $N$ order polynomial functions of the magnitude $Ast$ of the astigmatic power and the coefficients $b_i$ are $N$ order polynomial functions of the spherical power $Sph$;

and wherein

• the total performance factor $P$ is additionally obtained by multiplying by a third performance factor $P_3(A) = A_1 * sin^2 A + A_2 * cos^2 A$, wherein the coefficients $A_1$ and $A_2$ are N order polynomial functions of the spherical power $Sph$ and of the magnitude $Ast$ of the astigmatic power,

wherein N is a whole number and N > 0.

**17.** Graphics user interface for displaying the performance of progressive lenses, specifically under consideration of individual parameters of a specific spectacle wearer, comprising:

• at least one prescription data input section for inputting individual prescription data, wherein the individual prescription data comprise the spherical power $Sph$, the magnitude $Ast$ of the astigmatic power and the axial position A of the astigmatic power; and
• at least one performance display section for displaying total performance factors $P$ for each quality class of progressive lenses as a function of the individual prescription data and/or individual wearer data, wherein the total performance factor $P$ correlates with the quality of the monocular visual acuity and/or the binocular visual impression and wherein all progressive lenses of all quality classes have a largely identical base design and wherein the quality classes differ in the manner of optimisation of the progressive lenses in the quality class as a function of the individual parameters;

wherein

○ the total performance factor $P$ displayed in the prescription data input section is obtained by multiplying at least a first performance factor $P_1(Sph)$ by a second $P_2(Ast)$ performance factor; to display

○ the first performance factor $P_1$ which is a function $$P_1(Sph) = \sum_{i=0}^{N} a_i * Sph^i$$ of the spherical power $Sph$;

○ the second performance factor which is a function $$P_2(Ast) = \sum_{i=0}^{N} b_i * Ast^i$$ of the magnitude $Ast$ of the astigmatic power; and
○ the coefficients $a_i$ which are $N$ order polynomial functions of the magnitude $Ast$ and the coefficients $b_i$ which are $N$ order polynomial functions of the spherical power $Sph$; and wherein
○ the total performance factor $P$ is additionally obtained by multiplying by a third performance

factor $P_3(A) = A_1 * sin^2 A + A_2 * cos^2 A$, wherein the coefficients $A_1$ and $A_2$ are $N$ order polynomial functions of the spherical power $Sph$ and of the magnitude $Ast$ of the astigmatic power,

wherein N is a whole number and N > 0.

## Revendications

1. Procédé pour le calcul par ordinateur de la performance de verres progressifs et en particulier en tenant compte des paramètres individuels d'un porteur de lunettes donné, où les paramètres individuels comprennent au moins des données prescrites individuelles,
le procédé comprenant les étapes suivantes :

   - saisie des paramètres individuels ;
   - calcul d'un facteur de performance global P pour chaque fois au moins deux classes de qualité de verres progressifs en fonction des paramètres individuels, où le facteur de performance global P est en corrélation avec la qualité de l'acuité visuelle monoculaire et/ou de l'impression visuelle binoculaire, et où tous les verres progressifs de toutes les classes de qualité présentent dans l'ensemble un même design de base et les classes de qualité se différencient par la façon de réaliser l'optimisation des verres progressifs dans la classe de qualité en fonction des paramètres individuels ;
   - expression du facteur de performance global $P$ calculé pour les classes de qualité ;
   - les données prescrites individuelles comprennent l'influence sphérique $Sph$, la contribution $Ast$ de l'influence astigmatique et la position de l'axe $A$ de l'influence astigmatique ; et
   - le facteur de performance global $P$ est obtenu par une multiplication d'au moins un premier facteur de performance $P_1(Sph)$ avec un second facteur de performance $P_2(Ast)$ ;
   - le premier facteur de performance $P_1$ est une fonction

   $$P_1(Sph) = \sum_{i=0}^{N} a_i * Sph^i$$ de l'influence sphérique $Sph$ ;

   - le second facteur de performance est une fonction $$P_2(Ast) = \sum_{i=0}^{N} b_i * Ast_i$$ de la contribution $ASt$ de l'influence astigmatique ; et
   - les coefficients $a_i$ dépendent par des polynômes d'ordre $N$ de la contribution $Ast$ de l'influence astigmatique et les coefficients $b_i$ dépendent par des polynômes d'ordre $N$ de l'influence sphérique $Sph$ ;

et où

   - le facteur de performance global $P$ est obtenu de manière complémentaire par une multiplication avec un troisième facteur de performance $P_3(A) = A_1 * sin^2A + A_2 * cos^2A$, où les coefficients $A_1$ et $A_2$ dépendent par des polynômes d'ordre $N$ de l'influence sphérique $Sph$ et de la contribution $Ast$ de l'influence astigmatique, et

où N est un nombre entier et N > 0.

2. Procédé selon la revendication 1 où :

   - les données prescrites individuelles comprennent la contribution $Prism$ de l'influence prismatique ; et
   - le facteur de performance global est obtenu de manière complémentaire par une multiplication avec un quatrième facteur

   $$P_4 = \sum_{i=0}^{N} c_i * Prism^i$$ où les coefficients $c_i$ dépendent par un polynôme d'ordre $N$ de la contribution $Ast$ de l'influence astigmatique et de l'influence sphérique $Sph.$

3. Procédé selon l'une des revendications précédentes où :

   - les données prescrites individuelles comprennent la position de base $B$ de l'influence prismatique ; et
   - le facteur de performance global est obtenu de manière complémentaire par une multiplication avec un cinquième facteur de performance $P_5(B) = B_1 * sin^2B + B_2 * cos^2B$.

4. Procédé selon l'une des revendications précédentes où les paramètres individuels comprennent en outre des données individuelles du porteur de lunettes.

5. Procédé selon la revendication 4 où :

   - les données individuelles du porteur de lunettes comprennent la distance cornée - sommet de la tête $HSA$ du porteur de lunettes ;
   - et le facteur de performance global est obtenu de manière complémentaire par une multiplication avec un sixième facteur de performance

   $$P_6(HSA) = \sum_{i=0}^{N} d_i * HSA^i$$

**6.** Procédé selon les revendications 4 ou 5 où :

   - les données individuelles du porteur comprennent le cintrage V du verre progressif implanté dans une monture de lunettes prédéterminée ; et
   - le facteur de performance global est obtenu en supplément par une multiplication avec un septième facteur de performance

$$P_7(V) = \sum_{i=0}^{N} e \star V^i.$$

**7.** Procédé selon l'une des revendications de 4 à 6 où:

   - les données individuelles du porteur comprennent l'angle de l'inclinaison V d'une monture de lunettes prédéterminée dans laquelle le verre progressif est disposé ; et
   - le facteur de performance global est obtenu de manière complémentaire par une multiplication avec un huitième facteur de performance

$$P_8(FSW) = \sum_{i=0}^{N} f_i \star FSW^i.$$

**8.** Procédé selon l'une des revendications de 4 à 7 où:

   - les données individuelles du porteur comprennent la distance pupillaire PD du porteur de lunettes ; et
   - le facteur de performance global est obtenu de manière complémentaire par une multiplication avec un neuvième facteur de performance

$$P_9(PD) = \sum_{i=0}^{N} g_i \star PD^i.$$

**9.** Procédé selon l'une des revendications précédentes où :

   - les données prescrites individuelles comprennent l'addition ADD du verre progressif ; et
   - le facteur de performance global est obtenu de manière complémentaire par une multiplication avec un dixième facteur de performance

$$P_{10}(ADD) = \sum_{i=0}^{N} h_i \star ADD^i.$$

**10.** Procédé selon l'une des revendications précédentes où $N \leq 5$.

**11.** Procédé selon l'une des revendications précédentes où les facteurs de performance $P_i = P_i(Sph, Ast, ...)$, $i = 1, 2, ..., 10$ sont calculés pour une multitude de paramètres individuels pour chaque classe de qualité et sont de préférence enregistrés dans une banque de données.

**12.** Procédé selon l'une des revendications précédentes où :

   les facteurs de performance $P_i = P_i(Sph, Ast,...)$, $i = 1,2,...$ sont évalués au moyen d'une corrélation des données de la grandeur relative du champ de vision des verres progressifs de chaque classe de qualité pour une multitude de combinaisons des paramètres individuels ; et où

   - la grandeur relative du champ de vision est définie, pour une combinaison prédéterminée des paramètres individuels, comme la relation de la grandeur du champ de vision d'un verre progressif de n'importe quelle classe de qualité pour la combinaison donnée de paramètres individuels et d'une grandeur théorique du champ de vision prédéterminée.

**13.** Procédé selon l'une des revendications précédentes comprenant en outre les étapes de :

   - l'enregistrement des paramètres individuels ;
   - l'indication des facteurs de performances calculés des classes de qualité.

**14.** Résultat d'un programme d'ordinateur qui comprend des moyens pour réaliser le procédé pour l'exploitation de la performance d'un verre progressif comprenant les caractéristiques selon l'une des revendications de 1 à 13 lorsqu'elles sont chargées et exécutées sur un ordinateur.

**15.** Moyen d'enregistrement comprenant un programme d'ordinateur qui y est enregistré, où le programme d'ordinateur comprend des moyens pour la réalisation du procédé pour l'exploitation de la performance d'un verre progressif comprenant les caractéristiques selon l'une des revendications de 1 à 13 lorsqu'elles sont chargées et exécutées sur un ordinateur.

**16.** Dispositif pour l'exploitation assistée par ordinateur de la performance de verres progressifs et en particulier en tenant compte des paramètres individuels d'un porteur de lunettes donné, où les paramètres individuels comprennent au moins des données prescrites individuelles,

   - les moyens d'enregistrement pour l'enregistrement des paramètres individuels à enregistrer ;
   - des moyens de calcul pour le calcul d'un facteur de performance global P pour chaque fois au moins deux classes de qualité de verres progressifs en fonction des paramètres individuels, où le facteur de performance global $P$ est en corrélation avec la qualité de l'acuité visuelle monoculaire et/ou avec l'impression visuelle binoculaire ; et où tous les verres progressifs de toutes les classes de qualité présentent un design de base dans l'ensemble identique et que les classes de qualité se différencient dans leur façon d'optimiser les verres progressifs dans la classe de qualité en fonction des paramètres individuels ;

- moyen de délivrance pour donner le facteur de performance global $P$ pour les classes de qualité,

où

- les données prescrites individuelles comprennent l'influence sphérique $Sph$, la contribution de l'influence astigmatique $Ast$ et la position de l'axe A de l'influence astigmatique ; et
- le facteur de performance global $P$ est obtenu par une multiplication par au moins un premier facteur de performance $P_1$ avec un deuxième facteur de performance $P_2$ ;

- le premier facteur de performance est une fonction $P_1(Sph) = \sum_{i=0}^{N} a_i * Sph^i$ de l'influence sphérique $Sph$ ;

- le deuxième facteur de performance est une fonction $P_2(Ast) = \sum_{i=0}^{N} b_i * Ast_i$ de la contribution $ASt$ de l'influence astigmatique ; et
- les coefficients $a_i$ dépendent, au moyen de l'ordre $N$ de polynômes, de la contribution $ASt$ de l'influence astigmatique et les coefficients $b_i$ dépendent, au moyen de l'ordre $N$ des polynômes, de l'influence sphérique $Sph$ et de la contribution $Ast$ de l'influence astigmatique,

où N est un nombre entier et N est > 0.

17. Interface informatique graphique pour la représentation de la performance de verres progressifs et en particulier, tenant compte de paramètres individuels d'un porteur de lunettes donné ; comprenant :

- au moins une partie d'entrée de données prescrites pour l'entrée de données prescrites individuelles, les données prescrites individuelles comprenant l'influence sphérique $Sph$, la contribution $ASt$ de l'influence astigmatique et le position de l'axe $A$ de l'influence astigmatique ; et
- au moins une partie de visualisation de la performance pour représenter les facteurs de performance globaux $P$ pour chaque classe de qualité de verres progressifs en fonction des données prescrites individuelles et/ou des données individuelles du porteur, le facteur de performance global $P$ étant corrélé avec la qualité de l'acuité visuelle monoculaire et/ou avec l'impression visuelle binoculaire et où tous les verres progressifs de toutes les classes de qualité présentent dans l'ensemble un même design de base et où les classes de qualité se différencient dans la manière de l'optimisation des verres progressifs dans la classe de qualité en fonction des paramètres individuels,
où
- le facteur de performance global $P$ représenté dans la partie d'entrée des données prescrites est obtenu par une multiplication d'au moins un premier facteur de performance $P_1(Sph)$ avec un deuxième facteur de performance $P_2(ASt)$ ;
- le premier facteur de performance $P_1$ qui est une fonction

$$P_1(Sph) = \sum_{i=0}^{N} a_i * Sph^i$$ de l'influence sphérique $Sph$ ;

- le deuxième facteur de performance qui est une fonction

$$P_2(Ast) = \sum_{i=0}^{N} b_i * Ast_i$$ de la contribution $ASt$ de l'influence astigmatique ; et
- les coefficients $a_i$ qui, au moyen de l'ordre $N$ de polynômes, dépendent de l'influence astigmatique et les coefficients $b_i$, qui au moyen de l'ordre $N$ des polynômes, dépendent de l'influence sphérique $Sph$ ; et où
- le facteur de performance global $P$ est obtenu de manière complémentaire par une multiplication avec un troisième facteur de performance $P_3(A) = A_1 * \sin^2 A + A_2 * \cos^2 A$, les coefficients $A1$ et $A2$ dépendant au moyen de l'ordre $N$ de polynômes de l'influence sphérique $Sph$ et de la contribution $Ast$ de l'influence astigmatique,

où N est un nombre entier et N est > 0.

EP 1 920 290 B1

S1

S2

S3

**Fig. 1**

S21

S22

S23

**Fig. 2**

**Fig. 3**

EP 1 920 290 B1

**Fig. 4**

**Fig. 5**

Fig. 6

**Fig. 7**

EP 1 920 290 B1

**Fig. 8**

EP 1 920 290 B1

**Fig. 9**

**Fig. 10**

**Fig. 11**

Fig. 12A     Fig. 12B     Fig. 12C     Fig. 12D

**Fig. 13**

EP 1 920 290 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19701312
- DE 10313275
- WO 0181979 A
- EP 0295849 A2
- US 6366823 B1